(19) Europäisches Patentamt
European Patent Office
Office européen des brevets

(11) **EP 4 561 236 A1**

(12) **EUROPEAN PATENT APPLICATION**
published in accordance with Art. 153(4) EPC

(43) Date of publication:
**28.05.2025 Bulletin 2025/22**

(21) Application number: **23851756.9**

(22) Date of filing: **07.08.2023**

(51) International Patent Classification (IPC):
**H04W 72/0453** (2023.01) **H04L 1/1812** (2023.01)

(52) Cooperative Patent Classification (CPC):
**H04L 1/1812; H04W 72/0453**

(86) International application number:
**PCT/CN2023/111417**

(87) International publication number:
**WO 2024/032535 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 CN 202210970529
07.04.2023 CN 202310401611**

(71) Applicant: **Huawei Technologies Co., Ltd.
Shenzhen, Guangdong 518129 (CN)**

(72) Inventors:
- **YI, Feng
  Shenzhen, Guangdong 518129 (CN)**
- **SU, Hongjia
  Shenzhen, Guangdong 518129 (CN)**
- **LU, Lei
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **TRANSPORT BLOCK SIZE DETERMINATION METHOD AND APPARATUS**

(57) This application provides a method for determining a transport block size and an apparatus. The method includes: A first terminal device receives first information from a second terminal device; and determines a TBS of the first information based on a first quantity of frequency domain resource units, where the first quantity $n'_{PRB}$ of frequency domain resource units satisfies $n'_{PRB} = N * Mr \cdot N^{PRB}_{ref}$, $N^{PRB}_{ref}$ represents a second quantity of frequency domain resource units, and $N^{PRB}_{ref}$ is a positive integer. According to the method, the TBS of the first information is determined based on the first quantity of frequency domain resource units, the first quantity of frequency domain resource units is determined based on the second quantity of frequency domain resource units, and the second quantity of frequency domain resource units is a positive integer. In this way, determined TBSs respectively corresponding to initial transmission and retransmission of the first information can remain consistent, and failure of HARQ combining of data received a plurality of times can be avoided, thereby improving data decoding accuracy, and improving data decoding efficiency.

```
┌─────────────────┐        ┌─────────────────┐
│  First terminal │        │ Second terminal │
│     device      │        │     device      │
└─────────────────┘        └─────────────────┘
                                    │
                           ┌────────────────────┐
                           │ S901: The second   │
                           │ terminal device    │
                           │ sends first        │
                           │ information to the │
                           │ first terminal     │
                           │ device             │
                           └────────────────────┘
              First information     │
         ◄──────────────────────────
┌──────────────────────┐            │
│ S902: The first      │            │
│ terminal device      │            │
│ determines a TBS of  │            │
│ the first information│            │
│ based on a first     │            │
│ quantity of frequency│            │
│ domain resource units│            │
└──────────────────────┘
```

FIG. 9

Processed by Luminess, 75001 PARIS (FR)

**Description**

CROSS-REFERENCE TO RELATED APPLICATIONS

This application claims priority to Chinese Patent Application No. 202210970529.0, filed with the China National Intellectual Property Administration on August 12, 2022 and entitled "METHOD FOR DETERMINING TRANSPORT BLOCK SIZE AND APPARATUS", which is incorporated herein by reference in its entirety. This application claims priority to Chinese Patent Application No. 202310401611.6, filed with the China National Intellectual Property Administration on April 7, 2023 and entitled "METHOD FOR DETERMINING TRANSPORT BLOCK SIZE AND APPARATUS", which is incorporated herein by reference in its entirety.

TECHNICAL FIELD

This application relates to the field of communication technologies, and in particular, to a method for determining a transport block size and an apparatus.

BACKGROUND

In a wireless communication system, there may be a licensed band and an unlicensed band based on different used bands. In the licensed band, a user uses a spectrum resource based on scheduling of a central node. In the unlicensed band, a transmit node needs to use a spectrum resource in a contention manner. Specifically, the transmit node contends for a channel through listen before talk (listen before talk, LBT). In an unlicensed spectrum, the channel is preempted mainly in the contention manner during resource scheduling. Therefore, to reduce interference, in the unlicensed spectrum, not all band resources on a carrier can be used to carry data, and some band resources are used as a guard band (guard band). A terminal device may transmit data on a frequency domain resource other than the guard band, and these available resources are referred to as a frequency domain resource unit set.
In the wireless communication system, one channel may be divided into a plurality of subchannels, and one or more subchannels may be allocated to the terminal device each time. In a licensed spectrum, resources in a channel are evenly allocated to each subchannel based on a size of the entire channel. In the unlicensed spectrum, division into subchannels is performed in a manner the same as that in the licensed spectrum. However, due to existence of the guard band, sizes of two subchannels may not be equal. During calculation of a transport block size of transmitted data, the transport block size needs to be determined based on frequency domain resource unit data included in a subchannel. However, in the unlicensed spectrum, the frequency domain resource unit data included in the subchannel is not a fixed value. As a result, the finally determined transport block size is incorrect, and consequently, the data cannot be decoded successfully.

SUMMARY

This application provides a method for determining a transport block size and an apparatus, to resolve a problem of how to accurately determine a transport block size.
According to a first aspect, this application provides a method for determining a transport block size. The method includes: A first terminal device receives first information from a second terminal device; and the first terminal device determines a transport block size of the first information based on a first quantity of frequency domain resource units. The first quantity of frequency domain resource units satisfies the following form:

$$\mathrm{n}'_{PRB} = Mr * N_{ref}^{PRB}; \text{ or } \mathrm{n}'_{PRB} = \mathrm{N} * Mr * N_{ref}^{PRB}.$$

$\mathrm{n}'_{PRB}$ represents the first quantity of frequency domain resource units, N represents a quantity of frequency domain resource unit sets occupied by the first information, N is a positive integer, Mr represents a quantity of frequency domain resource unit groups occupied by the first information, Mr is a positive integer, $N_{ref}^{PRB}$ represents a second quantity of frequency domain resource units, $N_{ref}^{PRB}$ is a positive integer, and the second quantity of frequency domain resource units is a reference quantity of frequency domain resource units that are in a frequency domain resource unit group and that are in a frequency domain resource unit set, or the second quantity of frequency domain resource units is a reference quantity of frequency domain resource units that are in a frequency domain resource unit group and that are in at least two frequency domain resource unit sets, or the second quantity of frequency domain resource units is a reference quantity of frequency domain resource units included in a frequency domain resource unit group.

According to the foregoing method, the first terminal device determines the TBS of the first information based on the first quantity of frequency domain resource units. The first quantity of frequency domain resource units is determined based on the second quantity of frequency domain resource units. The second quantity of frequency domain resource units is a positive integer, and is decoupled from a quantity of frequency domain resource units actually occupied by the first information. In this way, when frequency domain resources allocated for initial transmission and retransmission, or for retransmission and retransmission are not equal, determined TBSs of information transmitted each time remain consistent, so that failure of hybrid automatic repeat request (hybrid automatic repeat request, HARQ) combining of data received a plurality of times can be avoided, thereby improving data decoding accuracy, and improving data decoding efficiency.

In an implementation, the second quantity of frequency domain resource units is 10 or 11.

In an implementation, the second quantity of frequency domain resource units is any value in a set {1, 2, 3, 4, 5, 6, 7, 8, 9, 10, 11, 12, 15, 20, 25, 50, 75, 100} or in a subset of the set.

The second quantity of frequency domain resource units is set to a fixed value, so that when frequency domain resources allocated for initial transmission and retransmission or allocated for retransmission and retransmission of the first information are not equal, determined TBSs of information transmitted each time can remain consistent. In this way, failure of HARQ combining of data received a plurality of times can be avoided, thereby improving the data decoding accuracy, and improving the data decoding efficiency.

In an implementation, the second quantity of frequency domain resource units satisfies any one of the following forms:

$$N_{ref}^{PRB} = ceil(RB_{total}/(M_{subch} * N));$$

$$N_{ref}^{PRB} = floor(RB_{total}/(M_{subch} * N));$$

and

$$N_{ref}^{PRB} = RB_{total}/(M_{subch} * N).$$

$RB_{total}$ represents a third quantity of frequency domain resource units, $M_{subch}$ represents a quantity of frequency domain resource unit groups included in a resource pool in which the first information is located, the third quantity of frequency domain resource units is determined based on a quantity of frequency domain resource units included in the resource pool, ceil represents rounding up, and floor represents rounding down.

In an implementation, the second quantity of frequency domain resource units may be determined in any one of the following manners:

$$N_{ref}^{PRB} = ceil(RB_{subtotal}/M_{total});$$

$$N_{ref}^{PRB} = floor(RB_{subtotal}/M_{total});$$

and

$$N_{ref}^{PRB} = RB_{subtotal}/M_{total}.$$

$RB_{subtotal}$ represents a fourth quantity of frequency domain resource units, and $M_{total}$ represents a quantity of frequency domain resource unit groups occupied by initial transmission and/or retransmission of the first information. The quantity of frequency domain resource unit group occupied by the retransmission herein is a quantity of frequency domain resource unit group reserved by the second terminal device for transmitting the first information, and includes a quantity of frequency domain resource unit groups occupied by at least one time of retransmission.

In an implementation, the fourth quantity of frequency domain resource units may be a quantity of frequency domain resource units reserved by the second terminal device for transmitting the first information, and the frequency domain resource units include frequency domain resource units included in the frequency domain resource unit group occupied by the initial transmission of the first information and frequency domain resource units included in the frequency domain resource unit group occupied by the at least one time of retransmission of the first information.

In an implementation, the third quantity of frequency domain resource units is a quantity of frequency domain resource units included in all frequency domain resource unit sets in the resource pool; or the third quantity of frequency domain resource units is a sum of a quantity of frequency domain resource units included in all frequency domain resource unit sets in the resource pool and a quantity of frequency domain resource units included in all guard bands in the resource pool.

In an implementation, the first terminal device receives first indication information, where the first indication information indicates the second quantity $N_{ref}^{PRB}$ of frequency domain resource units.

In an implementation, the first indication information is from the second terminal device, and the first indication information is carried in sidelink control information; or the first indication information is from a network device, and the first indication information is carried in higher layer signaling.

In an implementation, that the first terminal device determines the transport block size of the first information based on the first quantity of frequency domain resource units includes: The first terminal device determines the transport block size of the first information based on the first quantity of frequency domain resource units and a first symbol quantity.

According to the foregoing method, if a plurality of slot access points or end points are introduced into an unlicensed band, the TBS may be determined based on the first symbol quantity. Because the first symbol quantity is a fixed value or is indicated by the second terminal device, a difference between an actual TBS and a calculated TBS can be reduced, thereby improving accuracy of the TBS and improving decoding accuracy.

In an implementation, the first symbol quantity is any one of 5 to 12.

In an implementation, the first terminal device receives first sidelink indication information from the second terminal device, where the first sidelink indication information indicates the first symbol quantity.

In an implementation, the first symbol quantity satisfies the following form:

$$N'^{sh}_{symb}=N^{SL}_{symb}-\text{Y}.$$

$N'^{sh}_{symb}$ represents the first symbol quantity, $N^{SL}_{symb}$ represents a second symbol quantity, $N^{SL}_{symb}$ is a positive integer, Y is determined based on a quantity of automatic gain control symbols and a quantity of gap symbols in a slot, and Y is a positive integer.

In an implementation, the first terminal device receives second sidelink indication information from the second terminal device, where the second sidelink indication information indicates the second symbol quantity.

In an implementation, the first symbol quantity satisfies the following form:

$$N'^{sh}_{symb}=sl\text{-}LengthSymbols-\text{Y}.$$

$N'^{sh}_{symb}$ represents the first symbol quantity, *sl-LengthSymbols* represents a quantity that is of sidelink symbols in a slot and that is indicated by a higher layer, *sl-LengthSymbols* is a positive integer, Y is determined based on a quantity of automatic gain control symbols and a quantity of gap symbols in a slot, and Y is a positive integer.

In an implementation, a value of Y is 0, 1, or 2.

In an implementation, the first terminal device receives third sidelink indication information from the second terminal device, where the third sidelink indication information indicates a value of Y.

In an implementation, the method further includes:

The first terminal device receives second indication information, where the second indication information indicates that the first symbol quantity is determined based on the first parameter *sl-LengthSymbols,* or the second indication information indicates that the first symbol quantity is determined based on the first parameter *sl-LengthSymbols* and the second parameter Y or based on the second symbol quantity and the second parameter Y.

In an implementation, the first information satisfies the following condition, and the first symbol quantity is determined based on the first parameter *sl-LengthSymbols*:

The first condition includes one or more of the following: the second terminal device accesses a first channel through sharing, and the first information is transmitted on the first channel; or

the first information is transmitted within channel occupancy time; or
initial transmission of the first information is performed within the channel occupancy time, and the first information is in any slot after a 1st slot within the channel occupancy time.

In an implementation, the first symbol quantity satisfies the following form:

$$N'^{sh}_{symb}=N^{SL}_{symb} - \text{A–Y}, \quad N'^{sh}_{symb}=N^{SL}_{symb} + \text{A–Y}, \text{ or } \quad N'^{sh}_{symb}=sl\text{-}LengthSymbols\text{–A–Y}.$$

$N'^{sh}_{symb}$ represents the first symbol quantity, $N^{SL}_{symb}$ represents the second symbol quantity, $N^{SL}_{symb}$ is a positive integer, the second parameter Y is determined based on the quantity of automatic gain control symbols and the quantity of gap symbols in the slot, the second parameter Y is a positive integer, and the third parameter A is a predefined value, a preconfigured value, a network-configured value, or a value indicated by the second terminal device.

In an implementation, the method further includes:
The first terminal device receives third indication information, where the third indication information indicates a value of the third parameter A.

According to a second aspect, this application provides a method for determining a transport block size. The method includes: A first terminal device receives first information from a second terminal device; and the first terminal device determines a transport block size of the first information based on a first symbol quantity. The first symbol quantity is determined based on a quantity of symbols included in a slot that the first information is in.

According to the foregoing method, if a plurality of slot access points or end points are introduced into an unlicensed band, the TBS may be determined based on the first symbol quantity. Because the first symbol quantity is a fixed value or is indicated by the second terminal device, a difference between an actual TBS and a calculated TBS can be reduced, thereby improving accuracy of the TBS and improving decoding accuracy.

In an implementation, the first symbol quantity is any one of 5 to 12.

In an implementation, the first terminal device receives first sidelink indication information from the second terminal device, where the first sidelink indication information indicates the first symbol quantity.

$$N'^{sh}_{symb}=N^{SL}_{symb}.$$

$N'^{sh}_{symb}$ represents the first symbol quantity, and $N^{SL}_{symb}$ represents a second symbol quantity.

In an implementation, the first symbol quantity satisfies the following form:

$$N'^{sh}_{symb}=N^{SL}_{symb}\text{–Y}.$$

$N'^{sh}_{symb}$ represents the first symbol quantity, $N^{SL}_{symb}$ represents a second symbol quantity, and Y is determined based on a quantity of automatic gain control symbols and a quantity of gap symbols in the slot.

In an implementation, the first terminal device receives second sidelink indication information from the second terminal device, where the second sidelink indication information indicates the second symbol quantity.

In an implementation, the first symbol quantity satisfies the following form:

$$N'^{sh}_{symb}=sl\text{-}LengthSymbols\text{–Y}.$$

$N'^{sh}_{symb}$ represents the first symbol quantity, *sl-LengthSymbols* represents a quantity that is of sidelink symbols in a slot and that is indicated by a higher layer, and Y is determined based on a quantity of automatic gain control symbols and a quantity of gap symbols in the slot.

In an implementation, a value of Y is 0, 1, or 2.

In an implementation, if the slot includes an automatic gain control symbol and a gap symbol, the value of Y is 2;

or if the slot does not include an automatic gain control symbol or does not include a gap symbol, the value of Y is 1;

or if the slot does not include an automatic gain control symbol or a gap symbol, the value of Y is 0.

In an implementation, the first terminal device receives third sidelink indication information from the second terminal device, where the third sidelink indication information indicates a value of Y.

According to a third aspect, an embodiment of this application provides a communication apparatus. The apparatus may be used in a terminal device, and has a function of implementing the method performed by the first terminal device in the first aspect or the second aspect. The function may be implemented by hardware, or may be implemented by hardware executing corresponding software. The hardware or the software includes one or more units corresponding to the functions, for example, a transceiver unit and a processing unit. The transceiver unit may also be referred to as a communication unit or a transceiver module. The transceiver unit may specifically include a receiving unit and a sending unit. The processing unit may also be referred to as a processing module.

In an implementation, the communication apparatus is a communication chip, and the transceiver unit may be an input/output circuit or a port, an interface circuit, an output circuit, an input circuit, a pin, a related circuit, or the like of the communication chip. The processing unit may be a processing circuit or a logic circuit of the communication chip.

According to a fourth aspect, an embodiment of this application provides a communication apparatus. The communication apparatus includes a processor and a memory. The memory stores a computer program or computer instructions, and the processor is configured to invoke and run the computer program or the computer instructions stored in the memory, to enable the processor to implement any one of the possible implementations in the first aspect and the second aspect.

In an implementation, the communication apparatus further includes an interface circuit. The processor is configured to control the interface circuit to receive/send a signal and/or information and/or data.

According to a fifth aspect, an embodiment of this application provides a communication apparatus. The communication apparatus includes a processor. The processor is configured to invoke a computer program or computer instructions in a memory, to enable the processor to implement any one of the possible implementations in the first aspect and the second aspect.

In an implementation, the communication apparatus further includes an interface circuit. The processor is configured to control the interface circuit to receive/send a signal and/or information and/or data.

According to a sixth aspect, an embodiment of this application further provides a computer program product including instructions. When the computer program product is run on a computer, the computer is enabled to perform any one of the possible implementations in the first aspect and the second aspect.

According to a seventh aspect, an embodiment of this application further provides a computer-readable storage medium, including computer instructions. When the instructions are run on a computer, the computer is enabled to perform any one of the possible implementations in the first aspect and the second aspect.

According to an eighth aspect, an embodiment of this application further provides a chip apparatus, including a processor, configured to invoke a computer program or computer instructions in a memory, to enable the processor to perform any one of the possible implementations in the first aspect and the second aspect.

In an implementation, the processor is coupled to the memory through an interface.

According to a ninth aspect, an embodiment of this application further provides a method for determining a transport block size, including:

A second terminal device sends first information.

The second terminal device sends second indication information. The second indication information indicates that a first symbol quantity is determined based on a first parameter *sl-LengthSymbols,* or the second indication information indicates that the first symbol quantity is determined based on the first parameter *sl-LengthSymbols* and a second parameter Y or based on a second symbol quantity and the second parameter Y; and the first symbol quantity is for determining a transport block size of the first information.

In an implementation, a value of Y is 0, 1, or 2.

In an implementation, the first symbol quantity satisfies the following form:

$$N'^{sh}_{symb} = \text{sl-LengthSymbols} - Y.$$

$N'^{sh}_{symb}$ represents the first symbol quantity, *sl-LengthSymbols* represents a quantity that is of sidelink symbols in a slot and that is indicated by a higher layer, and *sl-LengthSymbols* is a positive integer. A value of *sl-LengthSymbols* is preconfigured, or network-configured.

In an implementation, the first symbol quantity satisfies the following form:

$$N'^{sh}_{symb}=N^{SL}_{symb} - \text{A--Y}, \quad N'^{sh}_{symb}=N^{SL}_{symb} + \text{A--Y, or} \quad N'^{sh}_{symb}=sl\text{-}LengthSymbols\text{--A--Y}.$$

$N'^{sh}_{symb}$ represents the first symbol quantity, $N^{SL}_{symb}$ represents the second symbol quantity, $N^{SL}_{symb}$ is a positive integer, a second parameter Y is determined based on a quantity of automatic gain control symbols and a quantity of gap symbols in the slot, the second parameter Y is a positive integer, and a third parameter A is a predefined value, a preconfigured value, a network-configured value, or a value indicated by the second terminal device.

**In** an implementation, the method further includes: The second terminal device sends third indication information, where the third indication information indicates a value of the third parameter A.

These aspects or other aspects of this application are clearer and more comprehensible in descriptions of the following embodiments.

BRIEF DESCRIPTION OF DRAWINGS

FIG. 1(a) to FIG. 1(c) are diagrams of network architectures according to an embodiment of this application;
FIG. 2 is a diagram of a structure of a channel according to an embodiment of this application;
FIG. 3 is a diagram of a structure of a channel according to an embodiment of this application;
FIG. 4 is a diagram of channel division according to an embodiment of this application;
FIG. 5 is a diagram of channel division according to an embodiment of this application;
FIG. 6(a) to FIG. 6(c) are diagrams of channel division according to an embodiment of this application;
FIG. 7(a) and FIG. 7(b) are diagrams of channel division according to an embodiment of this application;
FIG. 8 is a diagram of a slot structure according to an embodiment of this application;
FIG. 9 is a schematic flowchart of a method for determining a transport block size according to an embodiment of this application;
FIG. 10 is a diagram of channel division according to an embodiment of this application;
FIG. 11 is a schematic flowchart of a method for determining a transport block size according to an embodiment of this application;
FIG. 12 is a diagram of a structure of a communication apparatus according to an embodiment of this application; and
FIG. 13 is a diagram of a structure of a communication apparatus according to an embodiment of this application.

DESCRIPTION OF EMBODIMENTS

The following describes in detail embodiments of this application with reference to the accompanying drawings of the specification.

A communication method provided in embodiments of this application may be applied to a 4th generation (4th generation, 4G) communication system, for example, long term evolution (long term evolution, LTE), or may be applied to a 5th generation (5th generation, 5G) communication system, for example, 5G new radio (new radio, NR), or applied to various future communication systems, for example, a 6th generation (6th generation, 6G) communication system.

A method and an apparatus provided in embodiments of this application are based on a same or similar technical concept. Because problem-resolving principles of the method and the apparatus are similar, mutual reference may be made to implementations of the apparatus and the method. Repeated descriptions are not described.

The following first describes some terms in embodiments of this application, to facilitate understanding of a person skilled in the conventional technology.

A network device in embodiments of this application may be a device in a wireless network. For example, the network device may be a device that is deployed in a radio access network and that provides a wireless communication function for a terminal device. For example, the network device may be a radio access network (radio access network, RAN) node that connects a terminal device to a wireless network, and may also be referred to as an access network device.

The network device includes, but is not limited to, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the network device may be a network device in a 5G mobile communication system, for example, a next generation NodeB (next generation NodeB, gNB), a transmission and reception point (transmission and reception point, TRP), or a TP in an NR system, or an antenna panel or a group of antenna panels (including a plurality of antenna panels) of a base station in a 5G mobile communication system; or the network device may be a network node that forms a gNB or a transmission point, for example, a BBU or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may be considered as being sent by the DU, or sent by the DU and the AAU. It may be understood that the network device may be a device including one or more of a CU node, a DU node, or an AAU node. In addition, the CU may be classified as a network device in the RAN, or the CU may be classified as a network device in a core network (core network, CN). This is not limited in this application.

A terminal device in embodiments of this application may be a wireless terminal device that can receive scheduling and indication information of a network device. The terminal device may be a device that provides voice and/or data connectivity for a user, a handheld device with a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity for a user), for example, a handheld device or a vehicle-mounted device that has a wireless connection function. Currently, some examples of terminal devices are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in the Internet of Vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the Internet of Vehicles may be a vehicle-mounted device, a vehicle device, a vehicle-mounted module, a vehicle, or the like. The wireless terminal in the industrial control may be a camera, a robot, or the like. The wireless terminal in the smart home may be a television, an air conditioner, a sweeper, a speaker, a set-top box, or the like.

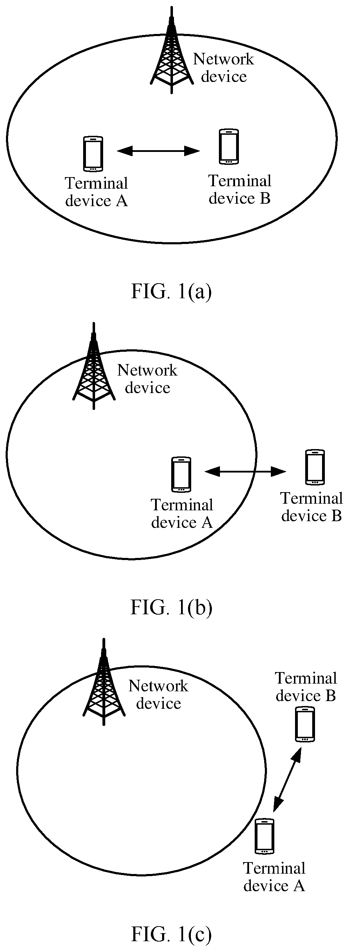

This application is applicable to a scenario in which sidelink (sidelink, SL) communication is supported, and supports a communication scenario with network coverage and a communication scenario without network coverage. FIG. 1(a) to FIG. 1(c) are diagrams of network architectures applicable to this application. In FIG. 1(a), both a terminal device A and a terminal device B are within signal coverage of a network device. In FIG. 1(b), a terminal device A is within signal coverage of a network device, but a terminal device B is outside the signal coverage of the network device. In FIG. 1(c), both a terminal device A and a terminal device B are outside signal coverage of a network device.

The terminal device A and the terminal device B in FIG. 1(a) and FIG. 1(b) may communicate with each other through a sidelink by using a resource scheduled by the network device, and the resource may be a licensed resource or a licensed band; or the terminal device A and the terminal device B may perform resource self-selection, that is, select, from a resource pool, a resource for sidelink communication. The resource is an unlicensed resource or an unlicensed band.

Because both the terminal device A and the terminal device B in FIG. 1(c) are outside the signal coverage of the network device, communication can be performed through a sidelink only in the resource self-selection manner.

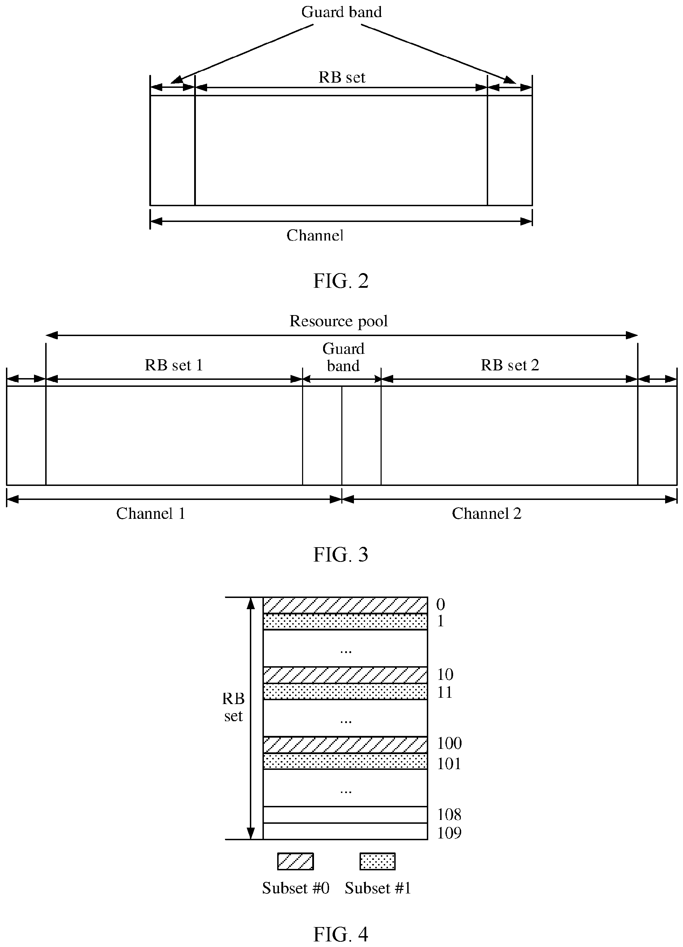

In an unlicensed band, before performing communication, a terminal device contends for a channel in an LBT manner. In an SL, a resource pool for data transmission may be preconfigured. One resource pool may include one or more channels. In an implementation, a bandwidth of each channel is 20 MHz. When a resource pool includes one channel, resource blocks included in the resource pool are resource blocks corresponding to a resource block (resource block, RB) set (set) in the channel. As shown in FIG. 2, in an unlicensed band, a channel includes an RB set and guard bands at two ends. The guard bands are used to ensure that a signal/energy on the current channel does not interfere with an adjacent channel. Frequency domain resources in the RB set may be used for data transmission.

If a resource pool includes a plurality of channels, the resource pool includes an RB set and resource blocks in some guard bands. As shown in FIG. 3, a channel 1 includes an RB set 1, and a channel 2 includes an RB set 2. In this case, a resource pool includes the RB set 1, the RB set 2, and guard bands between the RB set 1 and the RB set 2. When a terminal device successfully performs LBT on the two channels, resources available to the terminal device include not only resources in the RB sets in the two channels, but also the guard bands between the two adjacent RB sets.

In this application, one RB set may be divided into a plurality of subsets. In an implementation, resource blocks in the RB set may be grouped into M subsets in an interlacing manner. In this implementation, in resource blocks included in a subset, two adjacent resource blocks are separated by M resource blocks. Assuming that an identifier of a subset is m, where $m \in \{0, 1, ..., M-1\}$, and an index of a start resource block of a channel is 0, indexes of resource blocks included in the subset in the channel are $\{m, M + m, 2M + m, 3M + m, ...\}$. As shown in FIG. 4, for a channel with a subcarrier spacing of 15 kHz, the channel includes 110 RBs. When M=10, indexes of resource blocks included in a subset whose identifier is #0 in the RB set are {0, 10, 20, 30, ..., 100}, indexes of resource blocks included in a subset whose identifier is #1 in the RB set are {1, 11, 21, 31, ..., 101}, and other cases are deduced by analogy.

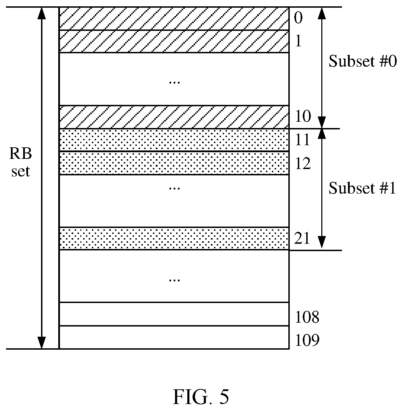

In another implementation, a plurality of consecutive resource blocks in the RB set may be grouped into a subset, and resource blocks in an RB set may be grouped into M subsets. In this implementation, resource blocks included in the subset are consecutive. Assuming that an identifier of a subset is m, where $m \in \{0, 1, ..., M-1\}$, and an index of a start resource block of a channel is 0, indexes of resource blocks included in the subset in the channel are {m, m+1, m+2, m+3, ...}. For example, as shown in FIG. 5, for a channel with a subcarrier spacing of 15 kHz, the channel includes 110 RBs. When M=10, indexes of resource blocks included in a subset whose identifier is #0 in the RB set are {0, 1, 2, 3, ..., 10}, indexes of resource blocks included in a subset whose identifier is #1 in the RB set are {11, 12, 13, ..., 21}, and other cases are deduced by analogy.

One channel or one resource pool may be divided into a plurality of frequency domain resource unit groups, and the frequency domain resource unit group may be a subchannel or an interlace (interlace). When a resource pool includes one channel, resource blocks included in a frequency domain resource unit group are resource blocks included in a subset. For example, with reference to FIG. 4, a resource pool includes an RB set, resources in the resource pool may be grouped into M frequency domain resource unit groups, and one frequency domain resource unit group corresponds to one subset. In this case, the frequency domain resource unit group may be an interlace. For example, resource blocks included in a frequency domain resource unit group #0 are resource blocks included in the subset #0. In other words, indexes of the resource blocks included in the frequency domain resource unit group #0 are $\{m, M + m, 2M + m, 3M + m, ...\}$.

For another example, with reference to FIG. 5, a resource pool includes an RB set, resources in the resource pool may be grouped into M frequency domain resource unit groups, and one frequency domain resource unit group corresponds to one subset. In this case, the frequency domain resource unit group may be a subchannel. For example, resource blocks included in a frequency domain resource unit group #0 are resource blocks included in the subset #0. In other words, indexes of the resource blocks included in the frequency domain resource unit group #0 are {m, m+1, m+2, m+3, ...}.

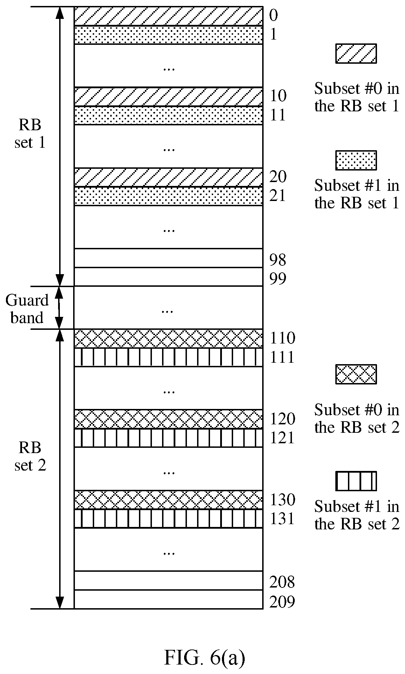

When a resource pool includes a plurality of channels (that is, includes a plurality of RB sets), there are two possible resource allocation manners for a frequency domain resource unit group. For example, resource blocks in the resource pool are grouped into a plurality of subsets in an interlacing manner. In this case, a frequency domain resource unit group may also be referred to as an interlace, or may be referred to as a frequency domain resource unit subset. As shown in FIG. 6(a), a subcarrier in the resource pool is configured to be 15 kHz, and the resource pool includes two channels. A channel 1 and a channel 2 are adjacent, the channel 1 includes an RB set 1, the channel 2 includes an RB set 2, and a quantity of subsets obtained by dividing each channel is 10, that is, M=10. The RB set 1 includes 100 RBs, whose indexes are respectively 0 to 99. A guard band includes 10 RBs, whose indexes are respectively 100 to 109. The RB set 2 includes 100 RBs, whose indexes are respectively 110 to 209. For example, indexes of RBs included in a subset whose identifier is #0 in the RB set 1 are {0, 10, 20, 30, ..., 90}, indexes of RBs included in a subset whose identifier is #1 in the RB set 1 are {1, 11, 21, 31, ..., 91}, and other cases are deduced by analogy. Indexes of RBs included in a subset whose identifier is #0 in the RB set 2 are {110, 120, 130, 140, ..., 200}, indexes of RBs included in a subset whose identifier is #1 in the RB set 2 are {111, 121, 131, 141, ..., 201}, and other cases are deduced by analogy.

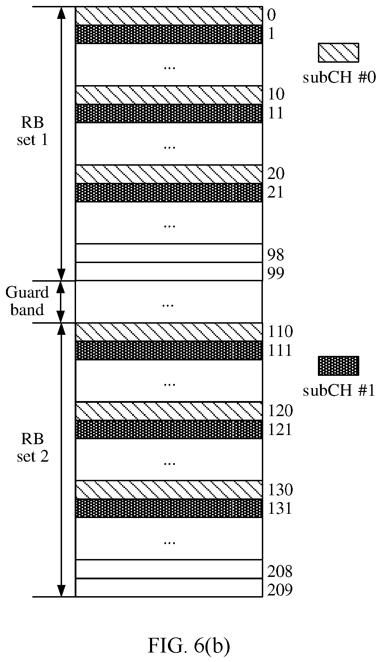

In Manner 1, resource blocks included in one frequency domain resource unit group cross a plurality of RB sets. To be specific, one frequency domain resource unit group corresponds to at least one subset in a resource pool, or one frequency domain resource unit group may include resource blocks corresponding to at least one subset in each of a plurality of RB sets in the resource pool. With reference to FIG. 6(a), FIG. 6(b) is used as an example. A subcarrier in a resource pool is configured to be 15 kHz, one frequency domain resource unit group corresponds to resource blocks corresponding to subsets with a same identifier in different RB sets in the resource pool, and a quantity of frequency domain resource unit groups in the resource pool is M=10. In other words, M is equal to a quantity of subsets in one channel. A quantity of resource blocks that are in two subsets and that are included in one frequency domain resource unit group is greater than or equal to 20. In other words, a quantity of resource blocks in one frequency domain resource unit group is a quantity of resource blocks in a plurality of resource block sets that are included in the frequency domain resource unit group. FIG. 6(b) is used as an example. A frequency domain resource unit group (subCH #0) includes resource blocks corresponding to a subset whose identifier is #0 in an RB set 1, and resource blocks corresponding to a subset whose identifier is #0 in an RB set 2. A frequency domain resource unit group (subCH #1) includes resource blocks corresponding to a subset whose identifier is #1 in the RB set 1, and resource blocks corresponding to a subset whose identifier is #1 in the RB set 2.

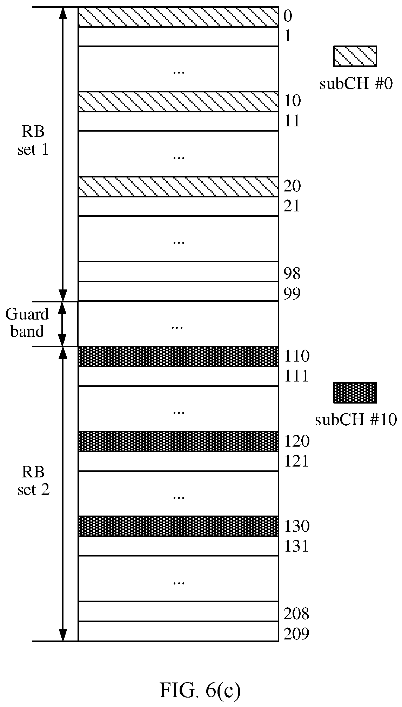

In Manner 2, resource blocks included in one frequency domain resource unit group are in one RB set, and the frequency domain resource unit group corresponds to at least one subset in each channel; or one frequency domain resource unit group may include resource blocks corresponding to at least one subset in one RB set in the resource pool. Specifically, one frequency domain resource unit group corresponds to resource blocks included in one subset in one channel. In this manner, because the resource blocks included in the frequency domain resource unit group do not cross a plurality of RB sets, resources in the frequency domain resource unit group allocated to the terminal device are all available. With reference to FIG. 6(a), FIG. 6(c) is used as an example. A subcarrier in a resource pool is configured to be 15 kHz, one frequency domain resource unit group corresponds to a resource block corresponding to one subset in one RB set in a resource pool. A quantity of frequency domain resource unit group in the resource pool is 2M=20, and a quantity of resource blocks in one frequency domain resource unit group is greater than or equal to 10. FIG. 6(c) is used as an example. A frequency domain resource unit group (subCH #0) includes resource blocks corresponding to a subset whose identifier is #0 in an RB set 1, and a frequency domain resource unit group (subCH #10) includes resource blocks corresponding to a subset whose identifier is #0 in an RB set 2.

Optionally, resource units (for example, RBs) included in a frequency domain resource unit group may be consecutive. To be specific, the resource units included in the frequency domain resource unit group are consecutively distributed in one or more resource block sets. Alternatively, the resource units included in the frequency domain resource unit group may be discrete. To be specific, the resource units included in the frequency domain resource unit group are discretely distributed in one or more resource block sets.

When the resource pool includes resources of only one RB set, effects of the foregoing two manners are the same. In addition, a corresponding name of an RB at a physical layer may alternatively be a physical resource block (physical resource block, PRB).

When receiving data, the terminal device needs to first determine a transport block size (transport block size, TBS) of the data before decoding the data. If the terminal device transmits the data through a physical sidelink shared channel (physical sidelink shared channel, PSSCH), and the PSSCH is scheduled by using sidelink control information (Sidelink Control Information, SCI), a process of calculating the TBS corresponding to the data may be briefly described as follows:

Step 1: First, calculate a quantity of resource elements (resource elements, REs) in a slot, namely, a parameter $N_{RE}$.

A quantity $N'_{RE}$ of REs that are in one PRB and that are allocated to the PSSCH for transmission is calculated. Specifically:

$$N'_{RE} = N_{sc}^{RB}\left(N_{symb}^{sh} - N_{symb}^{PSFCH}\right) - N_{oh}^{PRB} - N_{RE}^{DMRS} \quad \text{Formula (1)}.$$

- $N_{sc}^{RB} = 12$, representing a quantity of subcarriers on the PRB.

- $N_{symb}^{sh} = \text{sl-LengthSymbols}-2$, where sl-LengthSymbols represents a quantity of SL symbols in a slot, and the parameter is provided by a higher layer.

- When a higher layer parameter sl-PSFCH-Period is 2 or 4, if a "PSFCH overhead indication" field in SCI indicates 1, $N_{symb}^{PSFCH} = 3$; otherwise, $N_{symb}^{PSFCH} = 0$. When the higher layer parameter sl-PSFCH-Period is 0, $N_{symb}^{PSFCH} = 0$. When the higher layer parameter sl-PSFCH-Period is 1, $N_{symb}^{PSFCH} = 3$. A PSFCH represents a physical sidelink feedback channel (physical sidelink feedback channel).

- $N_{oh}^{PRB}$ represents an overhead, and is provided by a higher layer parameter sl-X-Overhead.

- $N_{RE}^{DMRS}$ is determined based on a higher layer parameter sl-PSSCH-DMRS-TimePattern by using Table 1 below.

Table 1: A value of N _RE^DMRS is determined based on a higher layer parameter sl-PSSCH-DMRS-TimePattern

| sl-PSSCH-DMRS-TimePatternList | $N_{RE}^{DMRS}$ |
|---|---|
| {2} | 12 |

(continued)

| sl-PSSCH-DMRS-TimePatternList | $N_{RE}^{DMRS}$ |
|---|---|
| {3} | 18 |
| {4} | 24 |
| {2,3} | 15 |
| {2,4} | 18 |
| {3,4} | 21 |
| {2,3,4} | 18 |

A quantity $N_{RE}$ of REs allocated to the PSSCH for transmission is then determined.

Specifically:

$$N_{RE} = N'_{RE} \cdot n_{PRB} - N_{RE}^{SCI,1} - N_{RE}^{SCI,2} \quad \text{Formula (2)}$$

- $n_{PRB}$ is a quantity of PRBs allocated to the PSSCH.

- $N_{RE}^{SCI,1}$ represents a quantity of REs occupied by a physical sidelink control channel (physical sidelink control channel, PSCCH) and a PSCCH demodulation reference signal (demodulation reference signal, DMRS).

- $N_{RE}^{SCI,2}$ represents a quantity of coded modulation symbols generated for 2nd-stage SCI transmission when it is assumed that a quantity of idle resource elements in a resource block to which a last coded symbol of the 2nd-stage SCI belongs is 0.

Step 2: Calculate an intermediate variable $N_{info}$ according to a formula $N_{info} = N_{RE} \cdot R \cdot Q_m \cdot \upsilon$.

$Q_m$ is a modulation order for data transmission, $R$ is a bit rate for data transmission, and $\upsilon$ is a quantity of layers (layers) for data transmission. $Q_m$ and $R$ may be obtained by querying a table by using an index number of a modulation and coding scheme (modulation and coding scheme, MCS) configured or indicated by the network device. If $N_{info} \leq 3824$, step 3 is used as a subsequent TBS calculation step. If $N_{info} > 3824$, step 4 is used as a subsequent TBS calculation step.

Step 3: If $N_{info} \leq 3824$, a TBS calculation step is as follows:

- An intermediate variable $N'_{info}$ is calculated. Specifically:

$$N'_{info} = \max\left(24, 2^n \times \left\lfloor \frac{N_{info}}{2^n} \right\rfloor \right), \quad n = \max\left(3, \lfloor \log_2(N_{info}) \rfloor - 6\right) \quad \text{Formula 3.}$$

max represents a maximum value operation, and $\lfloor \ \rfloor$ represents rounding down. After $N'_{info}$ is calculated, Table 2 is used to find a closest TBS that is not less than $N'_{info}$.

Step 4: If $N_{info} > 3824$, a TBS calculation step is as follows:

- An intermediate variable $N'_{info}$ is calculated. Specifically:

$$N'_{info} = \max\left(3840, 2^n \times round\left(\frac{N_{info} - 24}{2^n}\right)\right), \quad n = \lfloor \log_2(N_{info} - 24) \rfloor - 5 \quad \text{Formula 4.}$$

$$TBS = 8 \cdot C \cdot \left\lceil \frac{N'_{\text{info}} + 24}{8 \cdot C} \right\rceil - 24 , \quad \text{where} \quad C = \left\lceil \frac{N'_{\text{info}} + 24}{3816} \right\rceil , \text{ and } \lceil \; \rceil$$

If $R \leq 1/4$, the TBS satisfies the following Formula (5): represents a round-up operation.

If R>1/4, and N'$_{\text{info}}$ > 8424, the TBS satisfies the following Formula (6):

$$TBS = 8 \cdot C \cdot \left\lceil \frac{N'_{\text{info}} + 24}{8 \cdot C} \right\rceil - 24 , \quad \text{where} \quad C = \left\lceil \frac{N'_{\text{info}} + 24}{8424} \right\rceil .$$

If R>1/4, and N'$_{\text{info}}$ $\leq$ 8424, the TBS satisfies the following Formula (7):

$$TBS = 8 \cdot \left\lceil \frac{N'_{\text{info}} + 24}{8} \right\rceil - 24 .$$

Table 2: Table used for determining a TBS when N$_{\text{info}}$ $\leq$ 3824

| Index | TBS | Index | TBS | Index | TBS |
|---|---|---|---|---|---|
| 1 | 24 | 32 | 352 | 63 | 1352 |
| 2 | 32 | 33 | 368 | 64 | 1416 |
| 3 | 40 | 34 | 384 | 65 | 1480 |
| 4 | 48 | 35 | 408 | 66 | 1544 |
| 5 | 56 | 36 | 432 | 67 | 1608 |
| 6 | 64 | 37 | 456 | 68 | 1672 |
| 7 | 72 | 38 | 480 | 69 | 1736 |
| 8 | 80 | 39 | 504 | 70 | 1800 |
| 9 | 88 | 40 | 528 | 71 | 1864 |
| 10 | 96 | 41 | 552 | 72 | 1928 |
| 11 | 104 | 42 | 576 | 73 | 2024 |
| 12 | 112 | 43 | 608 | 74 | 2088 |
| 13 | 120 | 44 | 640 | 75 | 2152 |
| 14 | 128 | 45 | 672 | 76 | 2216 |
| 15 | 136 | 46 | 704 | 77 | 2280 |
| 16 | 144 | 47 | 736 | 78 | 2408 |
| 17 | 152 | 48 | 768 | 79 | 2472 |
| 18 | 160 | 49 | 808 | 80 | 2536 |
| 19 | 168 | 50 | 848 | 81 | 2600 |
| 20 | 176 | 51 | 888 | 82 | 2664 |
| 21 | 184 | 52 | 928 | 83 | 2728 |
| 22 | 192 | 53 | 984 | 84 | 2792 |
| 23 | 208 | 54 | 1032 | 85 | 2856 |
| 24 | 224 | 55 | 1064 | 86 | 2976 |
| 25 | 240 | 56 | 1128 | 87 | 3104 |
| 26 | 256 | 57 | 1160 | 88 | 3240 |

(continued)

| Index | TBS | Index | TBS | Index | TBS |
|-------|-----|-------|------|-------|------|
| 27 | 272 | 58 | 1192 | 89 | 3368 |
| 28 | 288 | 59 | 1224 | 90 | 3496 |
| 29 | 304 | 60 | 1256 | 91 | 3624 |
| 30 | 320 | 61 | 1288 | 92 | 3752 |
| 31 | 336 | 62 | 1320 | 93 | 3824 |

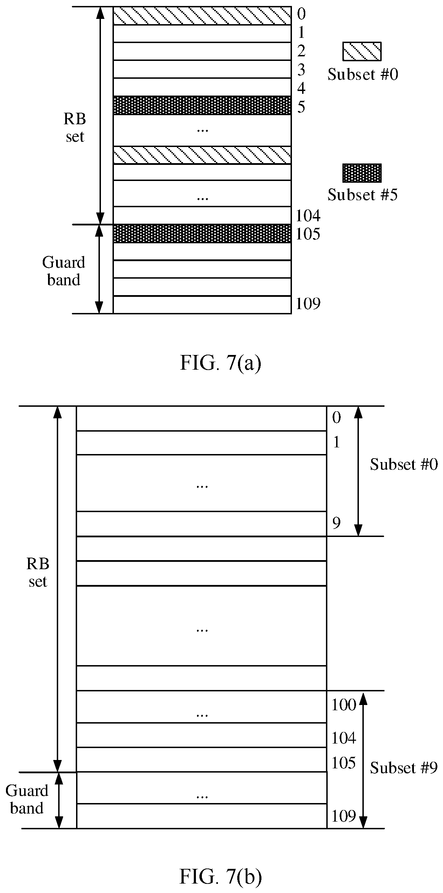

When communication is performed in an unlicensed band, the TBS calculated by a terminal device by using the foregoing method may not be accurate. A channel whose subcarrier spacing is 15 kHz includes an RB set and a guard band. As shown in FIG. 7(a), resource blocks in a channel are grouped at an interval of M=10, and a frequency domain resource unit group includes interlaced resource blocks. The RB set includes 105 resource blocks, whose corresponding indexes are 0 to 104. The guard band includes five resource blocks, whose corresponding indexes are 105 to 109. It can be learned from the figure that, in the RB set, indexes of 11 resource blocks included in a frequency domain resource unit group whose identifier is 0 are {0, 10, 20, 30, ..., 100}; and indexes of 11 resource blocks included in a frequency domain resource unit group whose identifier is 5 are {5, 15, 25, 35, ..., 105}. Because the resource block whose index is 105 is in the guard band, the resource block cannot be used for data transmission. Therefore, the frequency domain resource unit group whose identifier is 5 actually includes ten resource blocks. If the terminal device uses the frequency domain resource unit group whose identifier is 0 in initial transmission, a quantity of RBs allocated to the PSSCH for transmission is 11. If the terminal device uses the frequency domain resource unit group whose identifier is 5 in retransmission, a quantity of RBs allocated to the PSSCH for transmission is 10.

Similarly, when the frequency domain resource unit group includes consecutive resource blocks, the foregoing problem also occurs. As shown in FIG. 7(b), the channel in FIG. 7(a) is divided into ten frequency domain resource unit groups, and ten resource blocks included in each of frequency domain resource unit groups whose identifiers are 0 to 8 are all in the RB set. In ten resource blocks included in a frequency domain resource unit group whose identifier is 9, five resource blocks are in the RB set, and five resource blocks are in the guard band. Therefore, the frequency domain resource unit group whose identifier is 9 actually includes five resource blocks, and the five resource blocks in the guard band cannot be used for data transmission. If the terminal device uses the frequency domain resource unit group whose identifier is 0 in initial transmission, a quantity of RBs allocated to the PSSCH for transmission is 10. If the terminal device uses the frequency domain resource unit group whose identifier is 9 in retransmission, a quantity of RBs allocated to the PSSCH for transmission is 5.

Because the quantities of RBs included in the used frequency domain resource unit groups are different in different times of transmission results of calculated TBSs are also different. If TBSs determined for the initial transmission and the retransmission or for two times of retransmission are different, HARQ combining fails. As a result, data cannot be correctly decoded.

In addition, in Formula (1), a parameter corresponding to a slot reference point of the TBS is sl-LengthSymbols-2, where sl-LengthSymbols represents a quantity of SL symbols in a slot, the parameter is provided by a higher layer, and one resource pool has only one value of sl-LengthSymbols. For example, the value is 14.

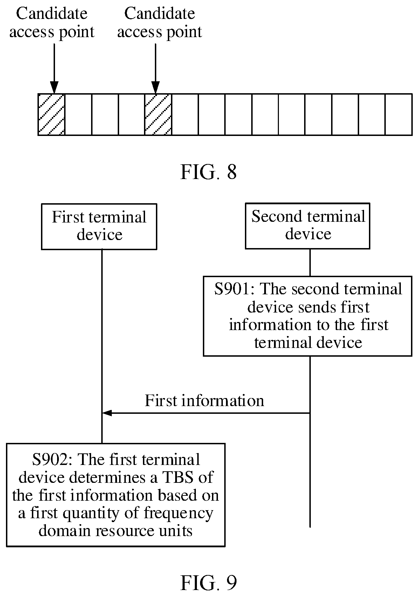

In an unlicensed band, a terminal device needs to perform an LBT operation before sending data, and can send data only after the LBT operation succeeds. The terminal device may perform access at any location in a slot. Therefore, after the LBT succeeds, the terminal device needs to wait until the slot starts before sending the data. In other words, the data is sent from a 1st symbol in the slot. When an interval between an occasion at which the LBT succeeds and time when a next slot starts is greater than 25 μs, there is a risk of a channel occupancy time (channel occupancy time, COT) loss. Therefore, a plurality of slot access symbols may be introduced, to reduce the risk of the COT loss. Similarly, a plurality of slot end points may alternatively be introduced to preempt COT in advance. FIG. 8 is a diagram of a slot structure according to this application. The slot structure has two candidate access points. The first candidate access point is a 1st symbol in the slot, and the second candidate access point is a 5th symbol in the slot. If the terminal device successfully performs LBT on a 4th symbol in the slot, the terminal device does not need to wait until a next slot starts before sending the data, but sends the data based on a specified slot structure when the 5th symbol starts.

Regardless of whether a plurality of slot access points or slot end points are introduced, a quantity of symbols in a slot changes, and is no longer fixed to 14. If the TBS is still calculated based on sl-LengthSymbols-2, when a difference between a length of actually sent symbols and the slot reference point is large, a difference between a TBS calculated by a receiver and an actual TBS is large. Consequently, data decoding performance of the receiver deteriorates.

Therefore, this application provides a method, to improve accuracy of TBS calculation. The following provides detailed descriptions.

The network architectures and service scenarios described in embodiments of this application are intended to describe the technical solutions in embodiments of this application more clearly, and do not constitute a limitation on the technical solutions provided in embodiments of this application. A person of ordinary skill in the conventional technology may know that with the evolution of the network architecture and the emergence of new service scenarios, the technical solutions provided in embodiments of this application are also applicable to similar technical problems.

FIG. 9 is a schematic flowchart of a method for determining a transport block size according to an embodiment of this application. The method may be applied to communication performed on a sidelink by using an unlicensed spectrum. The method includes the following steps.

S901: A second terminal device sends first information to a first terminal device, and correspondingly, the first terminal device receives the first information from the second terminal device.

Specific content of the first information is not limited in this application. The first information may be carried on a data channel, a TBS of the first information is a size of a transport block carried on the data channel, and the data channel may be a PSSCH.

The first information may be initially transmitted information, or may be retransmitted information. This is not limited in this application.

When this application is applied to an unlicensed spectrum, the second terminal device may perform LBT in one or more channels. If the LBT succeeds in one channel, the first information may be transmitted by using one or more frequency domain resource unit groups in the channel.

In this application, the second terminal device may reserve one or more frequency domain resource units based on a data amount corresponding to the first information. The second terminal device may reserve a quantity of frequency domain resource units required for initial transmission of the first information and a quantity of frequency domain resource units required for at least one time of retransmission of the first information.

S902: The first terminal device determines the TBS of the first information based on a first quantity of frequency domain resource units.

In this application, the first terminal device may determine, based on the first quantity of frequency domain resource units, a quantity $N_{RE}$ of REs allocated to the PSSCH carrying the first information for transmission, and then determine the TBS of the first information based on $N_{RE}$. For details, refer to the foregoing descriptions of determining the TBS based on $N_{RE}$ in step 2 to step 4. A specific process is not described again.

In this application, $N_{RE}$ satisfies Formula (8):

$$N_{RE} = N'_{RE} * n'_{PRB} - N_{RE}^{SCI,1} - N_{RE}^{SCI,2} \quad \text{Formula (8)}.$$

For a method for determining $N'_{RE}$, refer to Formula (1). For specific meanings of $N_{RE}^{SCI,1}$ and $N_{RE}^{SCI,2}$, refer to the descriptions in Formula (2). Details are not described herein again. $n'_{PRB}$ represents the first quantity of frequency domain resource units.

In a first implementation, the first quantity of frequency domain resource units $n'_{PRB}$ satisfies the following form:

$$n'_{PRB} = N * Mr * N_{ref}^{PRB} \quad \text{Formula (9)}.$$

N represents a quantity of frequency domain resource unit sets occupied by the first information, N is a positive integer, Mr represents a quantity of frequency domain resource unit groups occupied by the first information, Mr is a positive integer, and $N_{ref}^{PRB}$ represents a second quantity of frequency domain resource units.

In this application, the frequency domain resource unit may be an RB or a PRB, the frequency domain resource unit set may be an RB set, and the frequency domain resource unit group may alternatively be a subchannel or an interlace.

In this implementation, in the Mr frequency domain resource unit groups occupied by the first information, RBs included in one frequency domain resource unit group are in one or more RB sets. This meets the descriptions of the frequency domain resource unit group in Manner 1.

In Formula (9), in a possible implementation, the second quantity $N_{ref}^{PRB}$ of frequency domain resource units is a positive integer. Alternatively, in another possible implementation, the second quantity $N_{ref}^{PRB}$ of frequency domain resource units may be a reference quantity of frequency domain resource units in a frequency domain resource unit set that are included in the frequency domain resource unit group, or the second quantity of frequency domain resource units is a reference quantity of frequency domain resource units that are in at least two frequency domain resource unit sets and that are included in the frequency domain resource unit group, or the second quantity of frequency domain resource units is a reference quantity of frequency domain resource units included in the frequency domain resource unit group. In other words, when frequency domain resource units (namely, RBs) included in the frequency domain resource unit group are distributed in a plurality of resource block sets (namely, RB sets), the second quantity $N_{ref}^{PRB}$ of frequency domain resource units is a reference quantity of frequency domain resource units that are in one of the plurality of resource block sets and that are included in the frequency domain resource unit group. Optionally, frequency domain resource units included in the frequency domain resource unit group are evenly distributed in the plurality of resource block sets.

Optionally, the second quantity $N_{ref}^{PRB}$ of frequency domain resource units may be a reference quantity of frequency domain resource units that are in the plurality of resource block sets and that are included in the frequency domain resource unit group.

In an implementation, the second quantity of frequency domain resource units may be a preset value. For example, the second quantity of frequency domain resource units is 10 or 11. In an implementation, the second quantity of frequency domain resource units is any value in a set {1, 2, 3, 4, 5, 6, 7, 8, 9, 10, 11, 12, 15, 20, 25, 50, 75, 100} or in a subset of the set.

A specific value of the second quantity of frequency domain resource units may be indicated by a network device or the second terminal device, or may be independently determined by the first terminal device.

In a second implementation, the first quantity $n'_{PRB}$ of frequency domain resource units satisfies the following form:

$$\text{n}'_{PRB} = Mr * N_{ref}^{PRB} \quad \text{Formula (10)}.$$

Mr represents a quantity of frequency domain resource unit groups occupied by the first information.

In this implementation, in the Mr frequency domain resource unit groups occupied by the first information, RBs included in one frequency domain resource unit group are in one RB set. This meets the foregoing descriptions of the frequency domain resource unit group in Manner 2.

In Formula (10), in a possible implementation, the second quantity $N_{ref}^{PRB}$ of frequency domain resource units is a positive integer. Alternatively, in another possible implementation, the second quantity $N_{ref}^{PRB}$ of frequency domain resource units may be a reference quantity of frequency domain resource units in one frequency domain resource unit set that are included in the frequency domain resource unit group.

For example, a frequency domain resource unit is an RB. The RBs included in the frequency domain resource unit group are interlaced, and the RBs included in the frequency domain resource unit group are in a plurality of RB sets. Assuming that the quantity N of frequency domain resource unit sets occupied by the first information is 2, and the first information occupies one frequency domain resource unit group in each frequency domain resource unit set, Mr=1, and the second quantity of frequency domain resource units is 10 or 11. If the second terminal device indicates that the second quantity $N_{ref}^{PRB}$ of frequency domain resource units is 10, it may be determined, according to Formula (9), that the first quantity $n'_{PRB}$ of frequency domain resource units is 1×2×10=20.

For example, a frequency domain resource unit is an RB. The RBs included in the frequency domain resource unit group are interlaced, and the RBs included in the frequency domain resource unit group are in one RB set. A configuration of a subcarrier spacing of 15 kHz is used as an example. A quantity of frequency domain resource unit groups included in the RB set is 10. In other words, M=10. Assuming that the quantity Mr of frequency domain resource unit groups occupied by the first information is 2, if the second terminal device indicates that the second quantity of frequency domain resource units is 10, it may be determined, according to Formula (10), that the first quantity $n'_{PRB}$ of frequency domain resource units is 2×10=20.

In an implementation, the first terminal device may receive first indication information, where the first indication information indicates the second quantity $N_{ref}^{PRB}$ of frequency domain resource units. If the first indication information is from the second terminal device, the first indication information may be carried in sidelink control information. If the first indication information is from the network device, the first indication information may be carried in higher layer signaling.

In an implementation, the second quantity $N_{ref}^{PRB}$ of frequency domain resource units in Formula (9) may be determined in any one of the following manners:

$$N_{ref}^{PRB} = ceil(RB_{total}/(M_{subch} * N));$$

$$N_{ref}^{PRB} = floor(RB_{total}/(M_{subch} * N));$$

and

$$N_{ref}^{PRB} = RB_{total}/(M_{subch} * N).$$

$RB_{total}$ represents a third quantity of frequency domain resource units, $M_{subch}$ represents a quantity of frequency domain resource unit groups included in a resource pool in which the first information is located, the third quantity of frequency domain resource units is determined based on a quantity of frequency domain resource units included in the resource pool, ceil represents rounding up, and floor represents rounding down.

In this implementation, the second quantity of frequency domain resource units may alternatively be determined by the network device or the second terminal device in any one of the foregoing manners and then indicated to the first terminal device, or may be determined by the first terminal device in any one of the foregoing manners.

In an implementation, the second quantity $N_{ref}^{PRB}$ of frequency domain resource units in Formula (10) may be determined in any one of the following manners:

$$N_{ref}^{PRB} = ceil(RB_{total}/M_{subch});$$

$$N_{ref}^{PRB} = floor(RB_{total}/M_{subch});$$

and

$$N_{ref}^{PRB} = RB_{total}/M_{subch}.$$

$RB_{total}$ represents a third quantity of frequency domain resource units, $M_{subch}$ represents a quantity of frequency domain resource unit groups included in a resource pool in which the first information is located, the third quantity of frequency domain resource units is determined based on a quantity of frequency domain resource units included in the resource pool, ceil represents rounding up, and floor represents rounding down.

In this implementation, the second quantity of frequency domain resource units may alternatively be determined by the network device or the second terminal device in any one of the foregoing manners and then indicated to the first terminal device, or may be determined by the first terminal device in any one of the foregoing manners.

In this application, there may be a plurality of specific implementations for determining the third quantity of frequency domain resource units. Implementation 1: The third quantity of frequency domain resource units is a quantity of frequency domain resource units included in all frequency domain resource unit sets in the resource pool. Implementation 2: The third quantity of frequency domain resource units is a sum of a quantity of frequency domain resource units included in all frequency domain resource unit sets in the resource pool and a quantity of frequency domain resource units included in all guard bands in the resource pool.

For example, a frequency domain resource unit is an RB. The RBs included in the frequency domain resource unit group are interlaced, and the RBs included in the frequency domain resource unit group are in one RB set. It is assumed that a subcarrier spacing in the resource pool is configured to be 15 kHz. When a definition of frequency domain resource unit group in Formula (9) is used, RBs included in one frequency domain resource unit group are in a plurality of RB sets, and a quantity N of included frequency domain resource unit sets is 2. In this case, it is assumed that frequency domain resource unit group $M_{subch}$ in the resource pool is 10. If a quantity of resource blocks included in each frequency domain resource unit set is 105, and a quantity of resource blocks occupied by the guard band in the resource pool is 5, the third quantity of frequency domain resource units is 105×2+5=215.

In this case, the second quantity of frequency domain resource units is $N_{ref}^{PRB} = \text{ceil}(215/10/2) = 11$.

The quantity N of frequency domain resource unit sets occupied by the first information is 2, and the first information occupies one frequency domain resource unit group in each frequency domain resource unit set, that is, Mr=1. In this case, the first quantity of frequency domain resource units is $n'_{PRB}$=2×1×11=22.

In an implementation, the second quantity of frequency domain resource units in Formula (9) or Formula (10) may be determined in any one of the following manners:

$$N_{ref}^{PRB} = ceil(RB_{subtotal}/M_{\text{total}});$$

$$N_{ref}^{PRB} = floor(RB_{subtotal}/M_{\text{total}});$$

and

$$N_{ref}^{PRB} = RB_{subtotal}/M_{\text{total}}.$$

$RB_{subtotal}$ represents a fourth quantity of frequency domain resource units, and $M_{\text{total}}$ represents a quantity of frequency domain resource unit groups occupied by initial transmission and/or retransmission of the first information. The quantity of frequency domain resource unit group occupied by the retransmission herein is a quantity of frequency domain resource unit group reserved by the second terminal device for transmitting the first information, and includes a quantity of frequency domain resource unit groups occupied by at least one time of retransmission. The fourth quantity of frequency domain resource units may be a quantity of frequency domain resource units reserved by the second terminal device for transmitting the first information, and the frequency domain resource units include frequency domain resource units included in the frequency domain resource unit group occupied by the initial transmission of the first information and frequency domain resource units included in the frequency domain resource unit group occupied by the at least one time of retransmission of the first information.

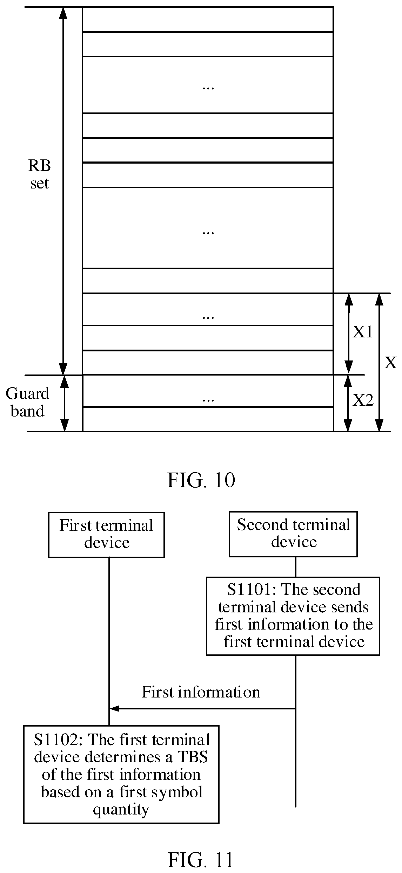

In an implementation, as shown in FIG. 10, when a frequency domain resource unit group in a channel includes X frequency domain resource units, if X1 frequency domain resource units in the X frequency domain resource units are in an RB set of the channel, X2 frequency domain resource units in the X frequency domain resource units are in a guard band of the channel, and the second terminal device performs LBT successfully in the channel and occupies the frequency domain resource unit group, data transmission may be performed by using any one of the following solutions.

Solution 1: Data transmission is performed by using the X1 frequency domain resource units in the RB set and in the frequency domain resource unit group.

In this solution, a frequency domain resource unit belonging to the RB set is always available.

Solution 2: When the quantity X1 of frequency domain resource units in the RB set and in the frequency domain resource unit group is greater than a preset threshold, or a ratio of X1 to X2 is greater than a preset ratio, data transmission is performed by using the X1 frequency domain resource units in the RB set and in the frequency domain resource unit group. When the quantity X1 of frequency domain resource units in the RB set and in the frequency domain resource unit group is less than or equal to the preset threshold, or the ratio of X1 to X2 is less than or equal to the preset ratio, data transmission is not performed by using the frequency domain resource units in the frequency domain resource unit group.

For example, when X1>1/2/3/4/5, the frequency domain resource unit group may be used for transmission.

For example, when X1/X2>0.1 or X1/X2>0.2, the frequency domain resource unit group may be used for transmission.

The preset threshold and the preset ratio may be configured by the network device, or may be independently determined by the second terminal device. The preset threshold may be any one of 1 to 9, and the preset ratio may be greater than 0 and less than 1.

The ratio of X1 to X2 may be replaced with a ratio of X2 to X1, a ratio of X1 to X, a ratio of X2 to X, or a ratio of X to X1, or a ratio of X to X2. Correspondingly, a value range of the preset ratio is also adjusted, and details are not described.

In this application, after determining the first quantity of frequency domain resource units, the first terminal device may determine the TBS of the first information according to the foregoing descriptions in step 2 to step 4. A specific process is not described again.

In addition, for the first information, a value of a first quantity of frequency domain resource units during initial transmission of the first information is the same as a value of a first quantity of frequency domain resource units during retransmission of the first information. In this way, it can be ensured that TBSs during initial transmission and retransmission of the first information are consistent.

According to the foregoing method, the first terminal device determines the TBS of the first information based on the first quantity of frequency domain resource units. The first quantity of frequency domain resource units is determined based on the second quantity of frequency domain resource units. The second quantity of frequency domain resource units is a positive integer, and is decoupled from a quantity of frequency domain resource units actually occupied by the first information. In this way, when frequency domain resources allocated for initial transmission and retransmission, or for retransmission and retransmission are not equal, determined TBSs of information transmitted each time remain consistent, so that failure of HARQ combining of data received a plurality of times can be avoided, thereby improving data decoding accuracy, and improving data decoding efficiency.

FIG. 11 is a schematic flowchart of a method for determining a transport block size according to an embodiment of this application. The method may be applied to communication performed on a sidelink by using an unlicensed spectrum. The method includes the following steps.

S1101: A second terminal device sends first information to a first terminal device, and correspondingly, the first terminal device receives the first information from the second terminal device.

Specific content of the first information is not limited in this application. The first information may be carried on a data channel, a TBS of the first information is a size of a transport block carried on the data channel, and the data channel may be a PSSCH.

S1102: The first terminal device determines the TBS of the first information based on a first symbol quantity.

In this application, the first terminal device may determine, based on the first symbol quantity, a quantity $N'_{RE}$ of REs that are in one PRB and that are allocated to the PSSCH carrying the first information for transmission, and then determine the TBS of the first information based on $N'_{RE}$. For details, refer to the foregoing descriptions of determining the TBS based on $N'_{RE}$ in step 2 to step 4. A specific process is not described again.

In this application, $N'_{RE}$ satisfies Formula (11):

$$N'_{RE} = N^{RB}_{sc}\left(N'^{sh}_{symb} - N^{PSFCH}_{symb}\right) - N^{PRB}_{oh} - N^{DMRS}_{RE} \quad \text{Formula (11)}.$$

$N'^{sh}_{symb}$ represents the first symbol quantity. For meanings of other parameters, refer to the descriptions in Formula (1). Details are not described herein again.

In an implementation, the first symbol quantity is any one of 5 to 12. When a plurality of candidate slot access points and/or slot end points are introduced, a value of the first symbol quantity may be determined based on a current slot access point, a possible slot end point, and a plurality of statuses like retransmission. A specific manner of determining the value of the first symbol quantity is not limited in this application. In addition, for the first information, a value of the first symbol quantity during initial transmission of the first information is the same as a value of the first symbol quantity during retransmission of the first information.

According to the method, the same first symbol quantity is used for initial transmission and retransmission, so that a same TBS can be obtained through calculation in each time of transmission. This can avoid failure of HARQ combining of data received a plurality of times, and improve data decoding accuracy.

In this implementation, the first symbol quantity may be indicated by a network device or the second terminal device, or may be independently determined by the first terminal device. For example, the first terminal device receives first sidelink indication information from the second terminal device, where the first sidelink indication information indicates the first symbol quantity.

According to the foregoing method, if a plurality of slot access points or end points are introduced into an unlicensed band, the TBS may be determined based on the first symbol quantity. Because the first symbol quantity is a fixed value or is indicated by the second terminal device, a difference between an actual TBS and a calculated TBS can be reduced, thereby improving accuracy of the TBS and improving decoding accuracy.

In an implementation, the first symbol quantity satisfies the following form:

$$N'^{sh}_{symb} = N^{SL}_{symb} - Y \quad \text{Formula (12)}.$$

$N'^{sh}_{symb}$ represents the first symbol quantity, $N^{SL}_{symb}$ represents a second symbol quantity, $N^{SL}_{symb}$ is a positive integer, a second parameter Y is determined based on a quantity of automatic gain control symbols and/or a quantity of gap symbols in a slot, and Y is a positive integer.

In an implementation, the second symbol quantity is any one of 7 to 14. When a plurality of candidate slot access points and/or slot end points are introduced, a value of the second symbol quantity may be determined based on a current slot access point, a possible slot end point, and a plurality of statuses like retransmission. A specific manner of determining the value of the second symbol quantity is not limited in this application. In addition, for the first information, a value of the second symbol quantity during initial transmission of the first information is the same as a value of the second symbol quantity during retransmission of the first information.

In this implementation, the second symbol quantity may be indicated by the network device or the second terminal device, or may be independently determined by the first terminal device. For example, the first terminal device receives second sidelink indication information from the second terminal device, where the second sidelink indication information indicates the second symbol quantity. In addition, for the first information, a value of Y during initial transmission of the first information is the same as a value of Y during retransmission of the first information.

In an implementation, a value of Y is 0, 1, or 2. For example, if a slot that the first information is in includes an automatic gain control (automatic gain control, AGC) symbol and a gap (gap) symbol, the value of Y is 2. If the slot that the first information is in includes only an automatic gain control symbol or a gap symbol, the value of Y is 1. If the slot that the first information is in does not include an automatic gain control symbol or a gap symbol, the value of Y is 0.

Y may be indicated by the network device or the second terminal device, or may be independently determined by the first terminal device. For example, the first terminal device receives third sidelink indication information from the second terminal device, where the third sidelink indication information indicates the value of Y.

In an implementation, the first symbol quantity satisfies the following form:

$$N'^{sh}_{symb}=\text{sl-LengthSymbols}-Y \text{ Formula (13-1);}$$

or

$$N'^{sh}_{symb}=\text{sl-LengthSymbols}-A-Y \text{ Formula (13-2).}$$

$N'^{sh}_{symb}$ represents the first symbol quantity, a first parameter *sl-LengthSymbols* represents a quantity that is of sidelink symbols in a slot and that is indicated by a higher layer, and *sl-LengthSymbols* is a positive integer. For example, *sl-LengthSymbols* is 14. For a value of the second parameter Y, refer to the descriptions in Formula (12). Details are not described herein again. A is a first predefined value, a preconfigured value, a network-configured value, or a value indicated by the second terminal device. For example, A is any one or more values in 0 to 7 or in a subset of the set, and A is a positive integer greater than or equal to 0.

In an implementation, the first terminal device receives second indication information, where the second indication information indicates that the first symbol quantity is determined based on the first parameter *sl-LengthSymbols,* or the second indication information indicates that the first symbol quantity is determined based on the first parameter *sl-LengthSymbols* and the second parameter Y or based on the second symbol quantity and the second parameter Y.

In an implementation, when the second indication information indicates that the first symbol quantity is determined based on the first parameter *sl-LengthSymbols,* $N'^{sh}_{symb}=\text{sl-LengthSymbols-2}$.

In an implementation, when the second indication information indicates that the first symbol quantity is determined based on the first parameter *sl-LengthSymbols* and the second parameter Y, the first symbol quantity satisfies Formula (13-1) or Formula (13-2).

In an implementation, when the second indication information indicates that the first symbol quantity is determined based on the second symbol quantity and the second parameter Y, the first symbol quantity satisfies Formula (12).

In this manner, the first symbol quantity has two configured values. A first configured value of the first symbol quantity is a value originally defined in R16/R17, that is, sl-LengthSymbols-2. A second configured value of the first symbol quantity is defined in Formula (13-1) or Formula (13-2) in this application. Based on the second indication information, the first terminal device determines to use one of the two configured values.

For example, the second indication information is carried in SCI, and is indicated by 1 bit. If a bit value is 0, it indicates that the first terminal device uses the first configured value (namely, sl-LengthSymbols-2); or if the bit value is 1, it indicates that the first terminal uses the second configured value (namely, a first reference symbol quantity determined according to Formula (13-1) or Formula (13-2)). The reverse is also true, and details are not described again.

It is assumed that a length of symbols included in a slot is 14, in other words, the first configured value is 14, and a second access symbol location is a 4th symbol in the slot. It is assumed that the second configured value is 12. In this case, the second parameter Y is 2. Therefore, the TBS may be obtained in the following manner: $N'^{sh}_{symb} = N^{SL}_{symb} - Y$, where

when the first configured value is used, $N^{SL}_{symb} = 14$; and when the second configured value is used, $N^{SL}_{symb} = 12$.

In an implementation, the first information satisfies the following condition, and the first symbol quantity is determined based on the first parameter *sl-LengthSymbols.* The first condition includes one or more of the following: The second terminal device accesses a first channel through sharing, and the first information is transmitted on the first channel; the first information is transmitted within channel occupancy time; or initial transmission of the first information is transmitted within the channel occupancy time, and the first information is in any slot after the 1st slot within the channel occupancy time.

In an implementation, the channel occupancy time is a sum of time of occupying the first channel in a channel access step performed by the second terminal device and time of sharing the first channel with another terminal device by the second terminal device. In an implementation, the channel occupancy time is a sum of time of occupying the first channel in a channel access step by a third terminal device and time of sharing the first channel with the second terminal and/or another terminal device by the third terminal device. The third terminal device may be the first terminal device, or may be another terminal device. For example, the first terminal device performs a type1 channel access procedure to access the first channel, and shares the first channel with the second terminal for access in parallel.

In an implementation, the first symbol quantity satisfies the following form:

$$N'^{sh}_{symb} = N^{SL}_{symb} - A - Y, \quad N'^{sh}_{symb} = N^{SL}_{symb} + A - Y, \text{ or } N'^{sh}_{symb} = sl\text{-}LengthSymbol - A - Y \quad \text{Formula}$$

$$(14)$$

$N'^{sh}_{symb}$ represents the first symbol quantity, and $N^{SL}_{symb}$ is a preconfigured value, a network-configured value, or a value indicated by the second terminal device. For example, $N^{SL}_{symb}$ may be any value in 7 to 14 or in a subset of the set. A third parameter A is a predefined value, a preconfigured value, a network-configured value, or a value indicated by the second terminal device. For example, A is one or more values in 0 to 7 or in a subset of the set, and A is a positive integer greater than or equal to 0. For example, $N^{SL}_{symb}$ is a higher layer parameter *sl-LengthSymbols,* and indicates an intra-slot sidelink symbol quantity, where *sl-LengthSymbols* is a positive integer. For example, *sl-LengthSymbols* is 14. A is a second value that is preconfigured, or network-configured, for example, A=2. For the value of Y, refer to the descriptions in Formula (12). Details are not described herein again.

In an implementation, the first terminal device receives third indication information, where the third indication information indicates the value of the third parameter A.

For a 1st slot of COT, because COT initiator UE of the COT does not determine a start symbol location, the TBS may be calculated by using a reference symbol (calculated according to Formula (14)). For transmission within the COT, the terminal device calculates the TBS by using Formula (13-1). This is because initial transmission and retransmission of most TBs are within the COT. In this case, transmission of the TBs starts from the 1st slot. Therefore, a calculation manner originally defined in R16/R17 is more appropriate. In other words, it may be predefined that, for a TB, if initial transmission of the TB is within the COT, that is, not the 1st slot of the COT, RX UE determines the TBS based on a value of Formula (13-1).

According to the foregoing descriptions of step 1, an example 1 in which the foregoing implementation is used is as follows:

In this application, calculation of N'$_{RE}$ satisfies Formula (11):

$$N'_{RE} = N^{RB}_{sc} \left( N'^{sh}_{symb} - N^{PSFCH}_{symb} \right) - N^{PRB}_{oh} - N^{DMRS}_{RE} \quad \text{Formula (11)}.$$

- $N^{RB}_{sc} = 12$, representing a quantity of subcarriers on the PRB.
- If the bit value in the second indication information is "1", or initial transmission of the first information is performed in the 1st slot within the COT, the first symbol quantity is determined in the following manner:

• $N'^{sh}_{symb}$=sl-LengthSymbols–2 , where sl-LengthSymbols represents a quantity of SL symbols in a slot, and the parameter is provided by a higher layer.

- If the bit value in the second indication information is "0", or initial transmission of the first information is performed in a non-1st slot within the COT, the first symbol quantity is determined in the following manner:

  •

$$N'^{sh}_{symb}=N^{SL}_{symb} - A-\text{Y}, \quad N'^{sh}_{symb}=N^{SL}_{symb} + A-\text{Y}, \text{ or } N'^{sh}_{symb}=\text{sl-LengthSymbol}-A-\text{Y}$$

Formula (14).

For other steps and parameter definitions, refer to the foregoing descriptions.

According to the foregoing descriptions of step 1, an example 2 in which the foregoing implementation is used is as follows:

In this application, calculation of N'$_{RE}$ satisfies Formula (11):

◇

$$N'_{RE} = N^{RB}_{sc}\left(N'^{sh}_{symb} - N^{PSFCH}_{symb}\right) - N^{PRB}_{oh} - N^{DMRS}_{RE} \quad \text{Formula (11)}.$$

- $N^{RB}_{sc} = 12$ , representing a quantity of subcarriers on the PRB.

-

$$N'^{sh}_{symb} = N^{SL}_{symb} - A-Y, \quad N'^{sh}_{symb} = N^{SL}_{symb} + A-Y, \text{ or } N'^{sh}_{symb} = sl\text{-}LengthSymbol - A-Y$$

Formula (14),

where $N^{SL}_{symb}$ or sl-LengthSymbols is predefined, preconfigured, or network-configured. A is a plurality of values that are predefined, preconfigured, or network-configured. For example, A has two values: A1 and A2.

  ♦ If the bit value in the second indication information is "1", or initial transmission of the first information is performed in the 1st slot within the COT, A=A1.
  ♦ If the bit value in the second indication information is "0", or initial transmission of the first information is performed in a non-1st slot within the COT, A=A2.

For other steps and parameter definitions, refer to the foregoing descriptions.

According to the foregoing method, for a channel access mechanism in the unlicensed band, if the terminal device continuously sends information within one COT, at least one of the gap symbol and the automatic gain control symbol in the slot may be used for data transmission. Therefore, Y indicates whether the slot that the first information is in includes the gap symbol and the AGC symbol, so that a quantity of symbols used for actual transmission in the slot can be indicated, thereby reducing a difference between the actual TBS and the calculated TBS, improving accuracy of the TBS, and improving decoding accuracy.

The procedures shown in FIG. 9 and FIG. 11 may be separately implemented, or may be jointly implemented. If the procedures shown in FIG. 9 and FIG. 11 are jointly implemented, the first terminal device determines the transport block size of the first information based on the first quantity of frequency domain resource units and the first symbol quantity. In this case, the first terminal device may determine, based on the first symbol quantity, a quantity N'$_{RE}$ of REs that are in one PRB and that are allocated to the PSSCH carrying the first information for transmission. For details, refer to the procedure shown in FIG. 11. A quantity N$_{RE}$ of REs allocated to the PSSCH carrying the first information for transmission is determined based on N'$_{RE}$ and the first quantity of frequency domain resource units. For details, refer to the procedure shown in FIG. 9. The TBS of the first information is then determined based on N$_{RE}$. For details, refer to the foregoing descriptions of determining the TBS based on N$_{RE}$ in step 2 to step 4. Details are not described herein again.

In the foregoing embodiments provided in this application, the method provided in embodiments of this application is described from a perspective of interaction between devices. To implement functions in the method provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

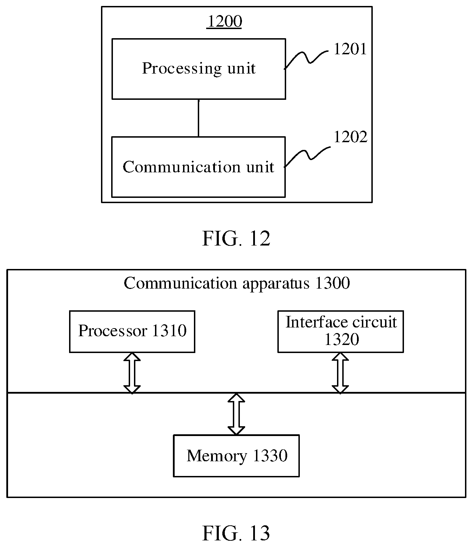

Same as the foregoing concept, as shown in FIG. 12, an embodiment of this application further provides a communication apparatus configured to implement a function of the network device or the terminal device in the foregoing method. For example, the apparatus may be a software module or a chip system. In this embodiment of this application, the chip system may include a chip, or may include a chip and another discrete component. The communication apparatus 1200 may include: a processing unit 1201 and a communication unit 1202.

In this embodiment of this application, the communication unit may also be referred to as a transceiver unit, and may include a sending unit and/or a receiving unit, which are respectively configured to perform sending and receiving steps of the network device or the terminal device in the foregoing method embodiments.

The following describes, in detail with reference to FIG. 12 and FIG. 13, the communication apparatus provided in this embodiment of this application. It should be understood that descriptions of apparatus embodiments correspond to the descriptions of the method embodiments. Therefore, for content that is not described in detail, refer to the method embodiments. For brevity, details are not described herein again.

The communication unit may also be referred to as an interface circuit, a transceiver machine, a transceiver apparatus, or the like. The processing unit may also be referred to as a processor, a processing board, a processing module, a processing apparatus, or the like. Optionally, a component that is in the communication unit 1202 and that is configured to implement a receiving function may be considered as a receiving unit, and a component that is in the communication unit 1202 and that is configured to implement a sending function may be considered as a sending unit. In other words, the communication unit 1202 includes the receiving unit and the sending unit. The communication unit sometimes may also be referred to as a transceiver machine, an interface circuit, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus implements a function of a first terminal device,

the communication unit is configured to receive first information from a second terminal device; and

the processing unit is configured to determine a transport block size of the first information based on a first quantity of frequency domain resource units, where the first quantity of frequency domain resource units satisfies the following form:

$$\mathrm{n}'_{PRB} = Mr \cdot N_{ref}^{PRB}; \text{ or } \mathrm{n}'_{PRB} = \mathrm{N} * Mr \cdot N_{ref}^{PRB}.$$

$\mathrm{n}'_{PRB}$ represents the first quantity of frequency domain resource units, N represents a quantity of frequency domain resource unit sets occupied by the first information, N is a positive integer, Mr represents a quantity of frequency domain resource unit groups occupied by the first information, Mr is a positive integer, $N_{ref}^{PRB}$ represents a second quantity of frequency domain resource units, $N_{ref}^{PRB}$ is a positive integer, and the second quantity of frequency domain resource units is a reference quantity of frequency domain resource units in a frequency domain resource unit set that are included in a frequency domain resource unit group.

When the communication apparatus implements a function of a first terminal device,

the communication unit is configured to receive first information from a second terminal device; and
the processing unit is configured to determine a transport block size of the first information based on a first symbol quantity, where the first symbol quantity is determined based on a quantity of symbols included in a slot that the first information is in.

When the communication apparatus implements a function of a second terminal device,

the processing unit is configured to generate first information; and
the communication unit is configured to send the first information; and send second indication information, where the second indication information indicates that a first symbol quantity is determined based on a first parameter sl-LengthSymbols, or the second indication information indicates that the first symbol quantity is determined based on the first parameter sl-LengthSymbols and a second parameter Y or based on a second symbol quantity and the second parameter Y; and the first symbol quantity is for determining a transport block size of the first information.

The foregoing is merely an example. The processing unit 1201 and the communication unit 1202 may further perform other functions. For more detailed descriptions, refer to related descriptions in the embodiment shown in FIG. 9 or FIG. 11. Details are not described herein again.

FIG. 13 is a diagram of a communication apparatus according to an embodiment of this application. The apparatus shown in FIG. 13 may be an implementation of a hardware circuit of the apparatus shown in FIG. 12. The communication apparatus is applicable to the foregoing flowcharts, and performs functions of the terminal device or the network device in the foregoing method embodiments. For ease of description, FIG. 13 shows only main components of the communication apparatus.

As shown in FIG. 13, the communication apparatus 1300 includes a processor 1310 and an interface circuit 1320. The processor 1310 and the interface circuit 1320 are coupled to each other. It may be understood that the interface circuit 1320 may be an interface circuit, a pin, an interface circuit, or an input/output interface. Optionally, the communication apparatus 1300 may further include a memory 1330, configured to store instructions executed by the processor 1310, store input data required by the processor 1310 to run instructions, or store data generated after the processor 1310 runs instructions. The interface circuit may also be referred to as a transceiver machine, a transceiver, an input/output circuit, a transceiver circuit, or the like.

When the communication apparatus 1300 is configured to implement the method shown in FIG. 9 or FIG. 11, the processor 1310 is configured to implement the function of the processing unit 1201, and the interface circuit 1320 is configured to implement the function of the communication unit 1202.

It may be understood that, the processor in embodiments of this application may be a central processing unit, or may be another general-purpose processor, a digital signal processor, an application-specific integrated circuit, or another programmable logic device, a transistor logic device, a hardware component, or any combination thereof. The general-purpose processor may be a microprocessor or any regular processor or the like.

The memory in embodiments of this application may be a random access memory, a flash memory, a read-only memory, a programmable read-only memory, an erasable programmable read-only memory, an electrically erasable programmable read-only memory, a register, a hard disk, a removable hard disk, or a storage medium of any other form well-known in the conventional technology.

A person skilled in the conventional technology should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including, but not limited to, a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the conventional technology can make various modifications and variations to this application without departing from the scope of this application. This application is intended to cover these modifications and variations of this application provided that they fall within the scope of protection defined by the claims of this application and their equivalent technologies.

**Claims**

1.  A method for determining a transport block size, comprising:

    receiving, by a first terminal device, first information from a second terminal device; and
    determining, by the first terminal device, a transport block size of the first information based on a first quantity of frequency domain resource units, wherein
    the first quantity of frequency domain resource units satisfies the following form:

    $$\mathrm{n}'_{PRB} = N * Mr * N_{ref}^{PRB},$$

    wherein

    $\mathrm{n}'_{PRB}$ represents the first quantity of frequency domain resource units, N represents a quantity of frequency domain resource unit sets occupied by the first information, N is a positive integer, Mr represents a quantity of frequency domain resource unit groups occupied by the first information, Mr is a positive integer, $N_{ref}^{PRB}$ represents a second quantity of frequency domain resource units, $N_{ref}^{PRB}$ is a positive integer, and the second quantity of frequency domain resource units is a reference quantity of frequency domain resource units in a frequency domain resource unit set that are comprised in a frequency domain resource unit group.

2.  The method according to claim 1, wherein the second quantity of frequency domain resource units is 10 or 11.

3.  The method according to claim 1, wherein the second quantity of frequency domain resource units satisfies any one of the following forms:

    $$N_{ref}^{PRB} = ceil(RB_{total}/(M_{subch} * N));$$

    $$N_{ref}^{PRB} = floor(RB_{total}/(M_{subch} * N));$$

    and

    $$N_{ref}^{PRB} = RB_{total}/(M_{subch} * N),$$

    wherein $RB_{total}$ represents a third quantity of frequency domain resource units, $M_{subch}$ represents a quantity of frequency domain resource unit groups comprised in a resource pool in which the first information is located, the third quantity of frequency domain resource units is determined based on a quantity of frequency domain resource units comprised in the resource pool, ceil represents rounding up, and floor represents rounding down.

4.  The method according to claim 3, wherein the third quantity of frequency domain resource units is a quantity of frequency domain resource units comprised in all frequency domain resource unit sets in the resource pool; or
    the third quantity of frequency domain resource units is a sum of a quantity of frequency domain resource units comprised in all frequency domain resource unit sets in the resource pool and a quantity of frequency domain resource units comprised in all guard bands in the resource pool.

5. The method according to any one of claims 1 to 4, wherein the method further comprises:
receiving, by the first terminal device, first indication information, wherein the first indication information indicates the second quantity $N_{ref}^{PRB}$ of frequency domain resource units.

6. The method according to claim 5, wherein the first indication information is from the second terminal device, and the first indication information is carried in sidelink control information; or
the first indication information is from a network device, and the first indication information is carried in higher layer signaling.

7. The method according to any one of claims 1 to 5, wherein the determining, by the first terminal device, a transport block size of the first information based on a first quantity of frequency domain resource units comprises:
determining, by the first terminal device, the transport block size of the first information based on the first quantity of frequency domain resource units and a first symbol quantity.

8. The method according to claim 7, wherein the first symbol quantity is any one of 5 to 12.

9. The method according to claim 7 or 8, wherein the method further comprises:
receiving, by the first terminal device, first sidelink indication information from the second terminal device, wherein the first sidelink indication information indicates the first symbol quantity.

10. The method according to claim 7 or 8, wherein the first symbol quantity satisfies the following form:

$$N'^{sh}_{symb} = N^{SL}_{symb} - Y,$$

wherein $N'^{sh}_{symb}$ represents the first symbol quantity, $N^{SL}_{symb}$ represents a second symbol quantity, $N^{SL}_{symb}$ is a positive integer, Y is determined based on a quantity of automatic gain control symbols and a quantity of gap symbols in the slot, and Y is a positive integer.

11. The method according to claim 10, wherein the method further comprises:
receiving, by the first terminal device, second sidelink indication information from the second terminal device, wherein the second sidelink indication information indicates the second symbol quantity.

12. The method according to claim 7 or 8, wherein the first symbol quantity satisfies the following form:

$$N'^{sh}_{symb} = sl\text{-}LengthSymbols - Y,$$

wherein $N'^{sh}_{symb}$ represents the first symbol quantity, *sl-LengthSymbols* represents a quantity that is of sidelink symbols in a slot and that is indicated by a higher layer, *sl-LengthSymbols* is a positive integer, Y is determined based on a quantity of automatic gain control symbols and a quantity of gap symbols in the slot, and Y is a positive integer.

13. The method according to any one of claims 10 to 12, wherein a value of Y is 0, 1, or 2.

14. The method according to any one of claims 10 to 12, wherein the method further comprises:
receiving, by the first terminal device, third sidelink indication information from the second terminal device, wherein the third sidelink indication information indicates a value of Y.

15. The method according to any one of claims 10 to 14, wherein the method further comprises:
receiving, by the first terminal device, second indication information, wherein the second indication information indicates that the first symbol quantity is determined based on the first parameter *sl-LengthSymbols,* or the second indication information indicates that the first symbol quantity is determined based on the first parameter *sl-Length-Symbols* and the second parameter Y or based on the second symbol quantity and the second parameter Y.

**16.** The method according to any one of claims 10 to 14, wherein the first information satisfies the following condition, and the first symbol quantity is determined based on the first parameter *sl-LengthSymbols:*

the first condition comprises one or more of the following: the second terminal device accesses a first channel through sharing, and the first information is transmitted on the first channel; or
the first information is transmitted within channel occupancy time; or
initial transmission of the first information is performed within the channel occupancy time, and the first information is in any slot after a 1st slot within the channel occupancy time.

**17.** The method according to any one of claims 10 to 14, wherein the first symbol quantity satisfies the following form:

$$N'^{sh}_{symb} = N^{SL}_{symb} - A - Y, \quad N'^{sh}_{symb} = N^{SL}_{symb} + A - Y, \quad or \quad N'^{sh}_{symb} = sl\text{-}LengthSymbols - A - Y,$$

wherein $N'^{sh}_{symb}$ represents the first symbol quantity, $N^{SL}_{symb}$ represents the second symbol quantity, $N^{SL}_{symb}$ is a positive integer, the second parameter Y is determined based on the quantity of automatic gain control symbols and the quantity of gap symbols in the slot, the second parameter Y is a positive integer, and the third parameter A is a predefined value, a preconfigured value, a network-configured value, or a value indicated by the second terminal device.

**18.** The method according to claim 17, wherein the method further comprises:
receiving, by the first terminal device, third indication information, wherein the third indication information indicates a value of the third parameter A.

**19.** A communication apparatus, comprising:

a communication unit, configured to receive first information from a second terminal device; and
a processing unit, configured to determine a transport block size of the first information based on a first quantity of frequency domain resource units, wherein
the first quantity of frequency domain resource units satisfies the following form:

$$n'_{PRB} = N * Mr * N^{PRB}_{ref},$$

wherein

$n'_{PRB}$ represents the first quantity of frequency domain resource units, N represents a quantity of frequency domain resource unit sets occupied by the first information, N is a positive integer, Mr represents a quantity of frequency domain resource unit groups occupied by the first information, Mr is a positive integer, $N^{PRB}_{ref}$ represents a second quantity of frequency domain resource units, $N^{PRB}_{ref}$ is a positive integer, and the second quantity of frequency domain resource units is a reference quantity of frequency domain resource units in a frequency domain resource unit set that are comprised in a frequency domain resource unit group.

**20.** The apparatus according to claim 19, wherein the second quantity of frequency domain resource units is 10 or 11.

**21.** The apparatus according to claim 19, wherein the second quantity of frequency domain resource units satisfies any one of the following forms:

$$N^{PRB}_{ref} = ceil(RB_{total}/(M_{subch} * N));$$

$$N^{PRB}_{ref} = floor(RB_{total}/(M_{subch} * N));$$

and

$$N_{ref}^{PRB} = RB_{total}/(M_{subch} * N),$$

wherein $RB_{total}$ represents a third quantity of frequency domain resource units, $M_{subch}$ represents a quantity of frequency domain resource unit groups comprised in a resource pool in which the first information is located, the third quantity of frequency domain resource units is determined based on a quantity of frequency domain resource units comprised in the resource pool, ceil represents rounding up, and floor represents rounding down.

22. The apparatus according to claim 21, wherein the third quantity of frequency domain resource units is a quantity of frequency domain resource units comprised in all frequency domain resource unit sets in the resource pool; or the third quantity of frequency domain resource units is a sum of a quantity of frequency domain resource units comprised in all frequency domain resource unit sets in the resource pool and a quantity of frequency domain resource units comprised in all guard bands in the resource pool.

23. The apparatus according to any one of claims 19 to 22, wherein the apparatus further comprises:
the first terminal device receives first indication information, wherein the first indication information indicates the second quantity $N_{ref}^{PRB}$ of frequency domain resource units.

24. The apparatus according to claim 23, wherein the first indication information is from the second terminal device, and the first indication information is carried in sidelink control information; or
the first indication information is from a network device, and the first indication information is carried in higher layer signaling.

25. The apparatus according to any one of claims 19 to 24, wherein the processing unit is specifically configured to:
determine the transport block size of the first information based on the first quantity of frequency domain resource units and a first symbol quantity.

26. The apparatus according to claim 25, wherein the first symbol quantity is any one of 5 to 12.

27. The apparatus according to claim 25 or 26, wherein the communication unit is further configured to:
receive first sidelink indication information from the second terminal device, wherein the first sidelink indication information indicates the first symbol quantity.

28. The apparatus according to claim 25 or 26, wherein the first symbol quantity satisfies the following form:

$$N'^{sh}_{symb}=N^{SL}_{symb}-Y,$$

wherein $N'^{sh}_{symb}$ represents the first symbol quantity, $N^{SL}_{symb}$ represents a second symbol quantity, $N^{SL}_{symb}$ is a positive integer, Y is determined based on a quantity of automatic gain control symbols and a quantity of gap symbols in the slot, and Y is a positive integer.

29. The apparatus according to claim 28, wherein the communication unit is further configured to:
receive second sidelink indication information from the second terminal device, wherein the second sidelink indication information indicates the second symbol quantity.

30. The apparatus according to claim 25 or 26, wherein the first symbol quantity satisfies the following form:

$$N'^{sh}_{symb}=sl\text{-}LengthSymbols-Y,$$

wherein $N'^{sh}_{symb}$ represents the first symbol quantity, *sl-LengthSymbols* represents a quantity that is of sidelink symbols in a slot and that is indicated by a higher layer, *sl-LengthSymbols* is a positive integer, Y is determined based on a quantity of automatic gain control symbols and a quantity of gap symbols in the slot, and Y is a positive integer.

31. The apparatus according to any one of claims 28 to 30, wherein a value of Y is 0, 1, or 2.

32. The apparatus according to any one of claims 28 to 30, wherein the communication unit is further configured to: receive third sidelink indication information from the second terminal device, wherein the third sidelink indication information indicates a value of Y.

33. The apparatus according to any one of claims 28 to 32, wherein the communication unit is further configured to: receive second indication information, wherein the second indication information indicates that the first symbol quantity is determined based on the first parameter *sl-LengthSymbols,* or the second indication information indicates that the first symbol quantity is determined based on the first parameter *sl-LengthSymbols* and the second parameter Y or based on the second symbol quantity and the second parameter Y.

34. The apparatus according to any one of claims 28 to 32, wherein the first information satisfies the following condition, and the first symbol quantity is determined based on the first parameter *sl-LengthSymbols:*

    the first condition comprises one or more of the following: the second terminal device accesses a first channel through sharing, and the first information is transmitted on the first channel; or
    the first information is transmitted within channel occupancy time; or
    initial transmission of the first information is performed within the channel occupancy time, and the first information is in any slot after a 1st slot within the channel occupancy time.

35. The apparatus according to any one of claims 28 to 32, wherein

    the first symbol quantity satisfies the following form:

$$N'^{sh}_{symb} = N^{SL}_{symb} - A - Y, \quad N'^{sh}_{symb} = N^{SL}_{symb} + A - Y, \quad or \quad N'^{sh}_{symb} = sl\text{-}LengthSymbols - A - Y,$$

    wherein

    $N'^{sh}_{symb}$ represents the first symbol quantity, $N^{SL}_{symb}$ represents the second symbol quantity, $N^{SL}_{symb}$ is a positive integer, the second parameter Y is determined based on the quantity of automatic gain control symbols and the quantity of gap symbols in the slot, the second parameter Y is a positive integer, and the third parameter A is a predefined value, a preconfigured value, a network-configured value, or a value indicated by the second terminal device.

36. The apparatus according to claim 35, wherein the communication unit is further configured to: receive third indication information, wherein the third indication information indicates a value of the third parameter A.

37. A method for determining a transport block size, comprising:

    sending, by a second terminal device, first information; and
    sending, by the second terminal device, second indication information, wherein the second indication information indicates that a first symbol quantity is determined based on a first parameter *sl-LengthSymbols,* or the second indication information indicates that the first symbol quantity is determined based on the first parameter *sl-LengthSymbols* and a second parameter Y or based on a second symbol quantity and the second parameter Y; and the first symbol quantity is for determining a transport block size of the first information.

38. The method according to claim 37, wherein a value of Y is 0, 1, or 2.

39. The method according to claim 37 or 38, wherein the first symbol quantity satisfies the following form:

$$N'^{sh}_{symb} = \text{sl-LengthSymbols} - Y,$$

wherein $N'^{sh}_{symb}$ represents the first symbol quantity, *sl-LengthSymbols* represents a quantity that is of sidelink symbols in a slot and that is indicated by a higher layer, *sl-LengthSymbols* is a positive integer, and a value of *sl-LengthSymbols* is preconfigured, or network-configured.

40. The method according to claim 38 or 39, wherein

    the first symbol quantity satisfies the following form:

$$N'^{sh}_{symb} = N^{SL}_{symb} - A - Y, \quad N'^{sh}_{symb} = N^{SL}_{symb} + A - Y, \quad \text{or} \quad N'^{sh}_{symb} = \text{sl-LengthSymbols} - A - Y,$$

    wherein

    $N'^{sh}_{symb}$ represents the first symbol quantity, $N^{SL}_{symb}$ represents the second symbol quantity, $N^{SL}_{symb}$ is a positive integer, a second parameter Y is determined based on a quantity of automatic gain control symbols and a quantity of gap symbols in the slot, the second parameter Y is a positive integer, and the third parameter A is a predefined value, a preconfigured value, a network-configured value, or a value indicated by the second terminal device.

41. The method according to claim 40, wherein the method further comprises:
    sending, by the second terminal device, third indication information, wherein the third indication information indicates a value of the third parameter A.

42. A communication apparatus, comprising:

    a processing unit, configured to generate first information; and
    a communication unit, configured to send the first information; and send second indication information, wherein the second indication information indicates that a first symbol quantity is determined based on a first parameter *sl-LengthSymbols,* or the second indication information indicates that the first symbol quantity is determined based on the first parameter *sl-LengthSymbols* and a second parameter Y or based on a second symbol quantity and the second parameter Y; and the first symbol quantity is for determining a transport block size of the first information.

43. A communication apparatus, comprising a processor, wherein the processor is configured to execute a computer program or instructions in a memory, to enable the communication apparatus to implement the method according to any one of claims 1 to 18 and 37 to 41.

44. A computer-readable storage medium, storing a computer program or instructions, wherein when the computer program or the instructions are run on a computer, the computer is enabled to implement the method according to any one of claims 1 to 18 and 37 to 41.

FIG. 1(a)

FIG. 1(b)

FIG. 1(c)

Guard band

RB set

Channel

FIG. 2

Resource pool

RB set 1

Guard band

RB set 2

Channel 1

Channel 2

FIG. 3

RB set

0
1

...

10
11

...

100
101

...

108
109

Subset #0    Subset #1

FIG. 4

FIG. 5

FIG. 6(a)

FIG. 6(b)

FIG. 6(c)

FIG. 7(a)

FIG. 7(b)

Candidate
access point

Candidate
access point

FIG. 8

First terminal
device

Second terminal
device

S901: The second terminal
device sends first
information to the first
terminal device

First information

S902: The first terminal
device determines a TBS of
the first information based on
a first quantity of frequency
domain resource units

FIG. 9

FIG. 10

FIG. 11

<u>1200</u>

Processing unit 〜 1201

Communication unit 〜 1202

FIG. 12

Communication apparatus 1300

Processor 1310

Interface circuit 1320

Memory 1330

FIG. 13

## INTERNATIONAL SEARCH REPORT

| International application No. |
| --- |
| **PCT/CN2023/111417** |

| A. | CLASSIFICATION OF SUBJECT MATTER |
| --- | --- |
| | H04W72/0453(2023.01)i; H04L1/1812(2023.01)i |

According to International Patent Classification (IPC) or to both national classification and IPC

| B. | FIELDS SEARCHED |
| --- | --- |

Minimum documentation searched (classification system followed by classification symbols)

    IPC: H04W,H04L

Documentation searched other than minimum documentation to the extent that such documents are included in the fields searched

Electronic data base consulted during the international search (name of data base and, where practicable, search terms used)

    CNTXT, ENTXT, ENTXTC, VCN, VEN, CNKI, 3GPP: 传输块, 大小, 资源单元, 资源块, 组, 集合, 数量, TBS, PRB, RE, RB, group, RBG, set, number, quantity

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 109565361 A (LG ELECTRONICS INC.) 02 April 2019 (2019-04-02) abstract, and description, paragraphs 0026-0200 | 1-36, 43-44 |
| A | WO 2018202164 A1 (HUAWEI TECHNOLOGIES CO., LTD.) 08 November 2018 (2018-11-08) entire document | 1-36, 43-44 |
| A | WO 2022116014 A1 (HUAWEI TECHNOLOGIES CO., LTD.) 09 June 2022 (2022-06-09) entire document | 1-36, 43-44 |
| A | NTT DOCOMO, INC. "R1-1720821 DL/UL Resource Allocation" *3GPP TSG RAN WG1 Meeting 91*, 01 December 2017 (2017-12-01), entire document | 1-36, 43-44 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 November 2023** | **20 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/111417**

| | |
|---|---|
| **Box No. III** | **Observations where unity of invention is lacking (Continuation of item 3 of first sheet)** |

This International Searching Authority found multiple inventions in this international application, as follows:

I: Claims 1 and 19, and claims 43 and 44, when referring to claim 1.

II: Claims 37 and 42, and claims 43 and 44, when referring to claim 37.

The claims of group I and group II all relate to a method for determining the size of a transmission block, and the same or corresponding features of the two groups of claims relate to a second terminal device sending first information/receiving the first information from the second terminal device, and determining the size of a transmission block of the first information. However, the above-mentioned features are all customary means in the art. The claims of group I and the claims of group II do not have a same or corresponding special technical feature, do not fall within a single general inventive concept, and therefore do not comply with PCT Rule 13.1-13.2.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-36, and claims 43 and 44, when referring to claims 1-18**

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet) (July 2022)

**INTERNATIONAL SEARCH REPORT**
Information on patent family members

International application No.

**PCT/CN2023/111417**

| Patent document cited in search report | | | Publication date (day/month/year) | Patent family member(s) | | | Publication date (day/month/year) |
|---|---|---|---|---|---|---|---|
| CN | 109565361 | A | 02 April 2019 | JP | 2019537313 | A | 19 December 2019 |
| | | | | KR | 20180135868 | A | 21 December 2018 |
| | | | | KR | 20190018766 | A | 25 February 2019 |
| | | | | US | 2021211232 | A1 | 08 July 2021 |
| | | | | WO | 2018174564 | A1 | 27 September 2018 |
| | | | | EP | 3471304 | A1 | 17 April 2019 |
| WO | 2018202164 | A1 | 08 November 2018 | AU | 2018263110 | A1 | 19 December 2019 |
| | | | | US | 2022070841 | A1 | 03 March 2022 |
| | | | | EP | 3637907 | A1 | 15 April 2020 |
| | | | | AU | 2021204576 | A1 | 29 July 2021 |
| | | | | US | 2020068541 | A1 | 27 February 2020 |
| | | | | BR | 112019022986 | A2 | 19 May 2020 |
| | | | | CA | 3062222 | A1 | 01 November 2019 |
| | | | | CN | 108809571 | A | 13 November 2018 |
| | | | | CN | 109150484 | A | 04 January 2019 |
| | | | | CN | 109194455 | A | 11 January 2019 |
| | | | | IN | 201947045817 | A | 22 November 2019 |
| | | | | VN | 68909 | A | 25 February 2020 |
| | | | | ZA | 201907885 | A | 25 November 2020 |
| | | | | CN | 112512122 | A | 16 March 2021 |
| WO | 2022116014 | A1 | 09 June 2022 | WO | 2022116458 | A1 | 09 June 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210970529

- CN 202310401611